# EUROPEAN PATENT APPLICATION

(11) **EP 4 841 325 A2**
(43) Date of publication of application: **18.11.2026**
(21) Application number: 26196427.4
(22) Date of filing: 04.08.2026
(51) Int. Cl.: G02B 13/00, G02B 9/64

(54) **OPTICAL LENS, CAMERA MODULE, AND ELECTRONIC DEVICE**

(71) Applicant: Jiangxi OFILM Optical Co., Ltd., Nanchang, Jiangxi 330096 (CN)
(72) Inventor: ZHANG, Luobin, Nanchang, 330096 (CN); LIU, Binbin, Shenzhen, 518106 (CN)
(74) Representative: Metida

(57) **Abstract**

An optical lens includes first through eighth lenses arranged from an object side to an image side and having positive, negative, positive, negative, positive, negative, positive, and negative refractive powers. The first and second lenses form a first lens group, the third through fifth lenses form a second lens group, and the sixth through eighth lenses form a third lens group. The first lens group is fixed relative to an imaging plane. The second and third lens groups are movable along an optical axis between the first lens group and the imaging plane to provide zooming. The optical lens satisfies 22° < FOV < 36° and 2.1 < FNO < 3.2, where FOV is a maximum field-of-view angle and FNO is an F-number. A camera module includes the optical lens and an image sensor. An electronic device includes a housing to which the camera module is mounted.

## Description

### FIELD

The present disclosure relates to the field of optical imaging technologies and, more particularly, to an optical lens, a camera module, and an electronic device.

### BACKGROUND

With rapid technological development, optical lenses have become widely used in smart portable devices such as mobile phones and tablet computers, and demand for wider focal-length coverage by optical lenses continues to increase. Existing optical lenses having zoom capability, however, may provide unsatisfactory imaging quality and may not meet increasing market demands. Accordingly, there remains a need for an optical lens that provides both high imaging quality and zoom functionality.

### SUMMARY

The present disclosure discloses an optical lens, a camera module, and an electronic device. The optical lens can maintain imaging quality while providing a compact configuration and zoom functionality.

In order to achieve the above objects, in a first aspect of the present disclosure, an optical lens includes a total of eight lenses having refractive power and arranged, in order along an optical axis from an object side to an image side, as a first lens, a second lens, a third lens, a fourth lens, a fifth lens, a sixth lens, a seventh lens, and an eighth lens. The first lens has positive refractive power, an object-side surface that is convex near the optical axis, and an image-side surface that is concave near the optical axis. The second lens has negative refractive power and an image-side surface that is concave near the optical axis. The third lens has positive refractive power and an object-side surface that is convex near the optical axis. The fourth lens has negative refractive power and an image-side surface that is concave near the optical axis. The fifth lens has positive refractive power and object-side and image-side surfaces that are both convex near the optical axis. The sixth lens has negative refractive power and an image-side surface that is concave near the optical axis. The seventh lens has positive refractive power and object-side and image-side surfaces that are both convex near the optical axis. The eighth lens has negative refractive power and an image-side surface that is concave near the optical axis. The first and second lenses constitute a first lens group, the third through fifth lenses constitute a second lens group, and the sixth through eighth lenses constitute a third lens group. The first lens group is fixed relative to an imaging plane of the optical lens, and the second and third lens groups are movable along the optical axis between the first lens group and the imaging plane to vary a focal length of the optical lens. The optical lens satisfies: $22 ° < FOV < 36 ° ;$ and $2.1 < FNO < 3.2 ,$ where FOV is a maximum field-of-view angle of the optical lens, and FNO is an F-number of the optical lens.

In the optical lens provided by the present application, movement of the second and third lens groups between the first lens group and the imaging plane enables the optical lens to provide zoom functionality while maintaining a constant total track length during zooming, thereby facilitating a compact design. The eight lenses distribute refraction among the lenses, reducing the amount of refraction required of any individual lens and avoiding excessive lens curvature that could increase tolerance sensitivity. Further, providing three lenses in each of the second and third lens groups provides sufficient adjustment capability to maintain clear imaging. This configuration also avoids an excessive number of lenses in either movable lens group, thereby reducing momentum during movement and the power required from a drive motor, reducing the load on the drive motor, and enabling a rapid response.

The positive refractive power of the first lens, together with the convex shape of its object-side surface and the concave shape of image-side surface of the first lens near the optical axis, facilitates collection of rays over a large field and admission of a greater amount of light. The negative refractive power of the second lens and the concave shape of its image-side surface near the optical axis suppress an exit angle of rays and facilitate aberration correction by downstream lenses. The positive refractive power of the third lens and the convex shape of its object-side surface near the optical axis help moderate an angle of rays entering the optical lens from the front. The negative refractive power of the fourth lens and the concave shape of its image-side surface near the optical axis facilitate correction of spherical aberration, coma, and distortion generated by upstream lenses. The positive refractive power of the fifth lens and the convex shapes of its object-side and image-side surfaces near the optical axis help moderate an angle of rays entering from the front. The negative refractive power of the sixth lens and the concave shape of its image-side surface near the optical axis facilitate correction of spherical aberration, coma, and distortion. The positive refractive power of the seventh lens and the convex shapes of its object-side and image-side surfaces near the optical axis facilitate correction of distortion and astigmatism. The negative refractive power of the eighth lens and the concave shape of its image-side surface near the optical axis facilitate reduction of the total track length and correction of aberrations while suppressing an exit angle of rays.

In some embodiments, the optical lens satisfies the following conditional expressions: 22° < FOV < 36°, which controls the maximum field-of-view angle within an appropriate range and provides telephoto characteristics, thereby facilitating a high-pixel-count, high-definition configuration and maintaining imaging quality.

In some embodiments, the optical lens satisfies the following conditional expressions: 2.1 < FNO < 3.2, which provides a large aperture and sufficient light throughput to produce clearer images, including high-quality images of low-luminance object-space scenes such as night scenes and starry skies. The relationship also avoids introducing excessive aberrations and facilitates an overall optical balance.

In a second aspect, the present application discloses a camera module. The camera module includes the optical lens described above and an image sensor disposed at the image side of the optical lens.

By appropriately configuring surface shapes and refractive powers of the lenses while maintaining a fixed optical total track length, the camera module can provide zoom functionality, a compact configuration, and high-quality imaging.

In a third aspect, the present application discloses an electronic device. The electronic device includes a housing and the camera module described above, the camera module being mounted to the housing.

The camera module enables the electronic device to provide zoom functionality, high imaging quality, and a rapid response. The compact camera module also leaves additional space in the electronic device for other components.

### BRIEF DESCRIPTION OF THE DRAWINGS

FIG. 1 is a schematic structural diagram of an optical lens in a short focal-length state according to a first embodiment of the present disclosure.
FIG. 2 includes a longitudinal spherical aberration diagram, an astigmatism diagram, and a distortion diagram of the optical lens in the short focal-length state according to the first embodiment.
FIG. 3 is a schematic structural diagram of the optical lens in an intermediate focal-length state according to the first embodiment.
FIG. 4 includes a longitudinal spherical aberration diagram, an astigmatism diagram, and a distortion diagram of the optical lens in the intermediate focal-length state according to the first embodiment.
FIG. 5 is a schematic structural diagram of the optical lens in a long focal-length state according to the first embodiment.
FIG. 6 includes a longitudinal spherical aberration diagram, an astigmatism diagram, and a distortion diagram of the optical lens in the long focal-length state according to the first embodiment.
FIG. 7 is a schematic structural diagram of an optical lens according to a second embodiment of the present disclosure.
FIG. 8 includes a longitudinal spherical aberration diagram, an astigmatism diagram, and a distortion diagram of the optical lens according to the second embodiment.
FIG. 9 is a schematic structural diagram of an optical lens according to a third embodiment of the present disclosure.
FIG. 10 includes a longitudinal spherical aberration diagram, an astigmatism diagram, and a distortion diagram of the optical lens according to the third embodiment.
FIG. 11 is a schematic structural diagram of an optical lens according to a fourth embodiment of the present disclosure.
FIG. 12 includes a longitudinal spherical aberration diagram, an astigmatism diagram, and a distortion diagram of the optical lens according to the fourth embodiment.
FIG. 13 is a schematic structural diagram of an optical lens according to a fifth embodiment of the present disclosure.
FIG. 14 includes a longitudinal spherical aberration diagram, an astigmatism diagram, and a distortion diagram of the optical lens according to the fifth embodiment.
FIG. 15 is a schematic structural diagram of an optical lens according to a sixth embodiment of the present disclosure.
FIG. 16 includes a longitudinal spherical aberration diagram, an astigmatism diagram, and a distortion diagram of the optical lens according to the sixth embodiment.
FIG. 17 is a schematic structural diagram of an optical lens according to a seventh embodiment of the present disclosure.
FIG. 18 includes a longitudinal spherical aberration diagram, an astigmatism diagram, and a distortion diagram of the optical lens according to the seventh embodiment.
FIG. 19 is a schematic structural diagram of a camera module according to an embodiment of the present disclosure.
FIG. 20 is a schematic structural diagram of an electronic device according to an embodiment of the present disclosure.

### DETAILED DESCRIPTION

Embodiments of the present disclosure are described in detail below with reference to the drawings. Throughout the drawings, identical or similar reference numerals designate identical or similar elements or elements having identical or similar functions. The embodiments described with reference to the drawings are illustrative and are intended to explain, rather than limit, the present disclosure.

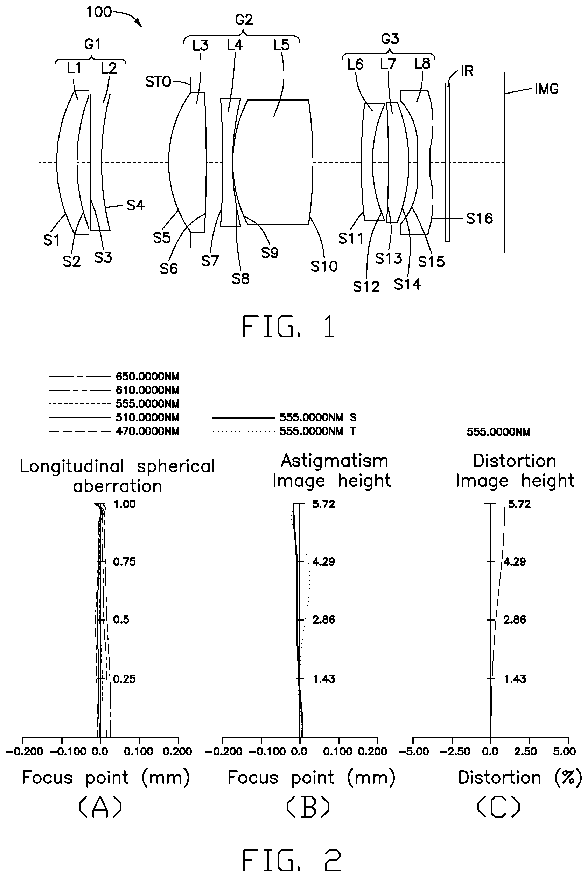

Referring to FIG. 1, an optical lens 100 according to an embodiment includes a total of eight lenses having refractive power. The eight lenses include, in order along an optical axis from an object side to an image side, a first lens L1, a second lens L2, a third lens L3, a fourth lens L4, a fifth lens L5, a sixth lens L6, a seventh lens L7, and an eighth lens L8.

The first lens L1 has positive refractive power, an object-side surface S1 that is convex near the optical axis, and an image-side surface S2 that is concave near the optical axis. The second lens L2 has negative refractive power and an image-side surface S4 that is concave near the optical axis. The third lens L3 has positive refractive power and an object-side surface S5 that is convex near the optical axis. The fourth lens L4 has negative refractive power and an image-side surface S8 that is concave near the optical axis. The fifth lens L5 has positive refractive power and an object-side surface S9 and an image-side surface S10 that are both convex near the optical axis. The sixth lens L6 has negative refractive power and an image-side surface S12 that is concave near the optical axis. The seventh lens L7 has positive refractive power and an object-side surface S13 and an image-side surface S14 that are both convex near the optical axis. The eighth lens L8 has negative refractive power and an image-side surface S16 that is concave near the optical axis.

As described above, movement of the second lens group G2 and the third lens group G3 between the first lens group G1 and the imaging plane IMG enables the optical lens 100 to provide zoom functionality while maintaining a constant total track length during zooming, thereby facilitating a compact design. The eight lenses distribute refraction among the lenses, reducing the amount of refraction required of any individual lens and avoiding excessive lens curvature that could increase tolerance sensitivity. Further, providing three lenses in each of the second lens group G2 and the third lens group G3 provides sufficient adjustment capability to maintain clear imaging. This configuration also avoids an excessive number of lenses in either movable lens group, thereby reducing momentum during movement and the power required from a drive motor, reducing the load imposed by the optical lens 100 on the drive motor, and enabling a rapid response.

The positive refractive power of the first lens L1 helps reduce the total track length of the optical lens 100. The convex shape of the object-side surface S1 and the concave shape of the image-side surface S2 near the optical axis facilitate collection of rays over a large field and admission of a greater amount of light. The negative refractive power of the second lens L2 and the concave shape of its image-side surface S4 near the optical axis suppress an exit angle of rays and facilitate aberration correction by downstream lenses. The positive refractive power of the third lens L3 and the convex shape of its object-side surface S5 near the optical axis help moderate an angle of rays entering the optical lens 100 from the front. The negative refractive power of the fourth lens L4 and the concave shape of its image-side surface S8 near the optical axis facilitate correction of spherical aberration, coma, and distortion generated by upstream lenses. The positive refractive power of the fifth lens L5 and the convex shapes of its object-side surface S9 and image-side surface S10 near the optical axis help moderate an angle of rays entering from the front. The negative refractive power of the sixth lens L6 and the concave shape of its image-side surface S12 near the optical axis facilitate correction of spherical aberration, coma, and distortion. The positive refractive power of the seventh lens L7 and the convex shapes of its object-side surface S13 and image-side surface S14 near the optical axis facilitate correction of distortion and astigmatism. The negative refractive power of the eighth lens L8 and the concave shape of its image-side surface S16 near the optical axis facilitate reduction of the total track length and correction of aberrations while suppressing an exit angle of rays.

The optical lens 100 satisfies: $22 ° < FOV < 36 ° ,$ where FOV is a maximum field-of-view angle of the optical lens 100. Satisfying this relationship controls the maximum field-of-view angle within an appropriate range and provides telephoto characteristics, thereby facilitating a high-pixel-count, high-definition configuration and maintaining imaging quality.

The optical lens 100 further satisfies: $2.1 < FNO < 3.2 ,$ where FNO is an F-number of the optical lens 100. Satisfying this relationship provides a large aperture and sufficient light throughput to produce clearer images, including high-quality images of low-luminance object-space scenes such as night scenes and starry skies. The relationship also avoids introducing excessive aberrations and facilitates an overall optical balance.

In some embodiments, the optical lens 100 satisfies: $1.5 < f 1 / fz 1 < 2.6 ,$ where f1 is an effective focal length of the first lens L1, and fz1 is an effective focal length of the optical lens 100 in the short focal-length state. The relationship appropriately configures a ratio of the focal length of the first lens L1 to the focal length of the optical lens 100 in the short focal-length state. The refractive power of the first lens L1 therefore does not become excessively strong, thereby avoiding introduction of excessive spherical aberration and providing satisfactory imaging quality.

In some embodiments, the optical lens 100 satisfies: $- 1.1 < f 2 / fz 1 < - 0.7 ,$ where f2 is an effective focal length of the second lens L2. Constraining the ratio of the focal length of the second lens L2 to the focal length of the optical lens 100 in the short focal-length state helps reduce a deflection angle of rays at the second lens L2. The negative refractive power provided by the second lens L2 can effectively balance spherical aberration of the optical lens 100 and correct aberrations, thereby providing satisfactory imaging quality. The relationship also facilitates an appropriate center thickness of the second lens L2, a shorter total track length, and a wider field of view.

In some embodiments, the optical lens 100 satisfies: $1.3 < fz 1 / f 3 < 1.7 ,$ where f3 is an effective focal length of the third lens L3. Constraining the ratio between the focal length of the third lens L3 and the focal length of the optical lens 100 in the short focal-length state helps balance spherical aberration generated by the second lens L2 and correct off-axis aberrations of the optical lens 100, thereby improving imaging quality.

In some embodiments, the optical lens 100 satisfies: $- 1.4 < fz 1 / f 4 < - 1 ,$ where f4 is an effective focal length of the fourth lens L4. Constraining the ratio between the focal length of the fourth lens L4 and the focal length of the optical lens 100 in the short focal-length state facilitates distribution of the overall refractive power of the optical lens 100 and balances distortion generated by the first, second, and third lenses L1, L2, and L3. The relationship also prevents the magnitude of the refractive power of the fourth lens L4 from becoming excessive, thereby suppressing higher-order aberrations and improving imaging quality.

In some embodiments, the optical lens 100 satisfies: $1.6 < fz 1 / f 5 < 1.8 ,$ where f5 is an effective focal length of the fifth lens L5. Constraining the ratio between the focal length of the fifth lens L5 and the focal length of the optical lens 100 in the short focal-length state reduces an exit angle of rays after refraction by the lens groups. This reduces incidence angles of the rays on an image sensor at the image side of the optical lens 100 and improves photosensitive performance of the image sensor.

In some embodiments, the optical lens 100 satisfies: $- 1.3 < f 6 / fz 1 < - 0.7 ,$ where f6 is an effective focal length of the sixth lens L6. The relationship between the focal length of the sixth lens L6 and the effective focal length of the optical lens 100 in the short focal-length state helps correct aberrations of the optical lens 100 and reduce temperature sensitivity, thereby improving imaging quality.

In some embodiments, the optical lens 100 satisfies: $0.7 < f 7 / fz 1 < 1.2 ,$ where f7 is an effective focal length of the seventh lens L7. Constraining the ratio between the focal length of the seventh lens L7 and the focal length of the optical lens 100 in the short focal-length state prevents the positive refractive power of the seventh lens L7 from becoming excessively strong. Accordingly, angles between incident rays and surface normals of the object-side surface S13 and the image-side surface S14 do not become excessively large, which further suppresses higher-order aberrations.

In some embodiments, the optical lens 100 satisfies: $- 2.2 < fz 1 / f 8 < - 1.3 ,$ where f8 is an effective focal length of the eighth lens L8. Constraining the ratio between the focal length of the eighth lens L8 and the focal length of the optical lens 100 in the short focal-length state facilitates correction of aberrations that may not be adequately corrected by the sixth and seventh lenses L6 and L7, thereby balancing aberrations and improving imaging quality.

In some embodiments, the optical lens 100 satisfies 1.6 < fz1/R11 < 2.7, where R11 is a radius of curvature at the optical axis of the object-side surface S1 of the first lens L1. In some embodiments, the optical lens 100 satisfies 0.8 < fz1/R12 < 2.1, where R12 is a radius of curvature at the optical axis of the image-side surface S2 of the first lens L1. Satisfying at least one of these relationships maintains astigmatism of the first lens L1 within an appropriate range and provides satisfactory imaging quality.

In some embodiments, the optical lens 100 satisfies 1.2 < |R21|/fz1, where R21 is a radius of curvature at the optical axis of the object-side surface S3 of the second lens L2. In some embodiments, the optical lens 100 satisfies 0.9 < fz1/R22 < 2.1, where R22 is a radius of curvature at the optical axis of the image-side surface S4 of the second lens L2. Satisfying at least one of these relationships maintains astigmatism of the second lens L2 within an appropriate range and effectively balances astigmatism generated by the first lens L1, thereby providing satisfactory imaging quality.

In some embodiments, the optical lens 100 satisfies 2.5 < fz1/R31 < 3.3, where R31 is a radius of curvature at the optical axis of the object-side surface S5 of the third lens L3. In some embodiments, the optical lens 100 satisfies 2.4 < |R32|/fz1, where R32 is a radius of curvature at the optical axis of the image-side surface S6 of the third lens L3. Satisfying at least one of these relationships maintains a surface profile of the third lens L3 within an appropriate range and effectively balances aberrations generated by the first and second lenses L1 and L2, thereby providing satisfactory imaging quality.

In some embodiments, the optical lens 100 satisfies 1.5 < |R41|/fz1, where R41 is a radius of curvature at the optical axis of the object-side surface S7 of the fourth lens L4. In some embodiments, the optical lens 100 satisfies 1.2 < fz1/R42 < 2.2, where R42 is a radius of curvature at the optical axis of the image-side surface S8 of the fourth lens L4. Satisfying at least one of these relationships maintains a surface profile of the fourth lens L4 within an appropriate range and facilitates formation of a double-Gauss configuration in cooperation with the first through third lenses L1 through L3, thereby providing satisfactory imaging quality.

In some embodiments, the optical lens 100 satisfies 2.1 < fz1/R51 < 2.8, where R51 is a radius of curvature at the optical axis of the object-side surface S9 of the fifth lens L5. In some embodiments, the optical lens 100 satisfies - 1.9 < R52/fz1 < -0.7, where R52 is a radius of curvature at the optical axis of the image-side surface S10 of the fifth lens L5. Satisfying at least one of these relationships maintains the refractive power of the fifth lens L5 within an appropriate range, avoids excessively strong refractive power, and enables the fifth lens L5 to receive rays from the object side with moderate refraction, thereby providing satisfactory imaging quality.

In some embodiments, the optical lens 100 satisfies 2.5 < |R61|/fz1, where R61 is a radius of curvature at the optical axis of the object-side surface S11 of the sixth lens L6. In some embodiments, the optical lens 100 satisfies 1.8 < fz1/R62 < 2.1, where R62 is a radius of curvature at the optical axis of the image-side surface S12 of the sixth lens L6. Satisfying at least one of these relationships maintains a surface profile of the sixth lens L6 within an appropriate range and enables the sixth lens L6 to cooperate with the seventh and eighth lenses L7 and L8 to balance overall optical performance and correct aberrations, thereby providing satisfactory imaging quality.

In some embodiments, the optical lens 100 satisfies 0.8 < R71/fz1 < 1.4, where R71 is a radius of curvature at the optical axis of the object-side surface S13 of the seventh lens L7. In some embodiments, the optical lens 100 satisfies -5 < R72/fz1 < -1.1, where R72 is a radius of curvature at the optical axis of the image-side surface S14 of the seventh lens L7. Satisfying at least one of these relationships maintains a surface profile of the seventh lens L7 within an appropriate range and enables the seventh lens L7 to cooperate with the sixth and eighth lenses L6 and L8 to balance overall optical performance and correct aberrations, thereby providing satisfactory imaging quality.

In some embodiments, the optical lens 100 satisfies 1.1 < |R81|/fz1, where R81 is a radius of curvature at the optical axis of the object-side surface S15 of the eighth lens L8. In some embodiments, the optical lens 100 satisfies 3.2 < fz1/R82 < 4.2, where R82 is a radius of curvature at the optical axis of the image-side surface S16 of the eighth lens L8. Satisfying at least one of these relationships maintains a surface profile of the eighth lens L8 within an appropriate range and enables the eighth lens L8 to cooperate with the sixth and seventh lenses L6 and L7 to balance overall optical performance and correct aberrations, thereby providing satisfactory imaging quality.

In some embodiments, the optical lens 100 satisfies: $- 2.1 < fG 1 / fz 1 < - 1.6 ,$ where fG1 is an effective focal length of the first lens group G1. Appropriately configuring the ratio of the focal length of the first lens group G1 to the effective focal length of the optical lens 100 in the short focal-length state facilitates a wider zoom range toward the short focal-length end. Assigning an appropriate refractive power to the first lens group G1 also facilitates correction of distortion and spherical aberration and further improves resolution of the optical lens 100.

In some embodiments, the optical lens 100 satisfies: $1.7 < fz 1 / fG 2 < 2 ,$ where fG2 is an effective focal length of the second lens group G2. Constraining the ratio of the effective focal length of the optical lens 100 in the short focal-length state to the effective focal length of the second lens group G2 facilitates a compact configuration. Coordinated distribution of refractive power among the lens groups provides a wide field of view and stable imaging quality in the short focal-length state. This distribution is particularly advantageous for a compact lens having a high zoom ratio and provides balanced optical performance throughout zooming.

In some embodiments, the optical lens 100 satisfies: $- 1.8 < fz 1 / fG 3 < - 1.3 ,$ where fz1 is an effective focal length of the optical lens 100 in the short focal-length state, and fG3 is an effective focal length of the third lens group G3. Constraining the ratio of fz1 to fG3 enables the third lens group G3 to control ray-divergence angles, reduce barrel distortion and peripheral aberrations at the wide-angle end, and improve image clarity and peripheral image quality in the short focal-length state.

In some embodiments, the optical lens 100 satisfies: $- 1.4 < fG 3 / fG 2 < - 1 .$ Constraining the ratio of the effective focal length of the third lens group G3 to the effective focal length of the second lens group G2, which have refractive powers of opposite signs, coordinates their contributions to focal-length variation during zooming. The relationship broadens the zoom ratio and provides coverage over a wider focal-length range. Aberration compensation between the positive- and negative-power lens groups also maintains stable imaging quality throughout zooming.

In some embodiments, the optical lens 100 satisfies: $4.8 < TTL / ImgH < 5.1 ,$ where TTL is a distance along the optical axis from the object-side surface S1 of the first lens L1 to the imaging plane IMG of the optical lens 100, and ImgH is one half of a diagonal length of an effective pixel region of an image sensor at the imaging plane IMG. Satisfying the relationship improves resolution across the entire field and image quality at peripheral fields, while providing a thin configuration having a small optical total track length.

In some embodiments, the optical lens 100 satisfies: $3.1 < TTL / \left(CT3+CT4+CT5\right) < 5.4 ,$ where CT3 is a thickness of the third lens L3 along the optical axis, CT4 is a thickness of the fourth lens L4 along the optical axis, and CT5 is a thickness of the fifth lens L5 along the optical axis. Controlling the ratio of the total track length to the sum of the axial thicknesses of the third through fifth lenses L3 through L5 facilitates appropriate spatial allocation and a compact structure.

In some embodiments, the optical lens 100 satisfies: $8 < TTL / \left(Az1-Az3\right) < 8.7 ,$ where Az1 is an axial air spacing from the image-side surface S4 of the second lens L2 to the object-side surface S5 of the third lens L3 in the short focal-length state, and Az3 is the corresponding axial air spacing in the long focal-length state. Constraining the ratio of the total track length to a difference between these spacings prevents the displacement of the second lens group G2 relative to the fixed first lens group G1 during zooming from becoming so large as to increase the overall size of the optical lens 100, while preventing the displacement from becoming so small as to limit the zoom ratio.

In some embodiments, the optical lens 100 satisfies: $19 < TTL / \left(Bz1-Bz3\right) < 25 ,$ where Bz1 is an axial air spacing from the image-side surface S10 of the fifth lens L5 to the object-side surface S11 of the sixth lens L6 in the short focal-length state, and Bz3 is the corresponding axial air spacing in the long focal-length state. Constraining the ratio of the total track length to a difference between these spacings enables the second and third lens groups G2 and G3 to move relative to one another to vary the focal length within a limited total track length. The relationship avoids excessive spacing variation that could increase system volume or mechanical complexity and avoids insufficient spacing adjustment that could limit the zoom range.

In some embodiments, the optical lens 100 satisfies: $5 < Az 1 / Az 3 < 29 .$ Constraining the ratio between the axial air spacing of the second and third lenses L2 and L3 in the short focal-length state and the corresponding axial air spacing in the long focal-length state enables a relatively large spacing in the short focal-length state, so that rays diverged by the negative-power second lens L2 are appropriately converged by the positive-power third lens L3 without excessive divergence that could increase peripheral-field aberrations. In the long focal-length state, the smaller axial air spacing Az3 accommodates repositioning of the movable lens groups for telephoto imaging.

In some embodiments, the optical lens 100 satisfies: $2.3 < \left(Az1-Az3\right) / \left(Bz1-Bz3\right) < 2.9 .$ Constraining the ratio of a change in spacing between the second and third lenses L2 and L3 to a change in spacing between the fifth and sixth lenses L5 and L6 helps stabilize focus at the imaging plane IMG during zooming and reduces variations in aberrations, such as field curvature and distortion. Rays can therefore converge accurately at the imaging plane IMG at different focal lengths, improving clarity and consistency over the zoom range.

In some embodiments, the optical lens 100 satisfies: $1.6 < Bz 1 / Bz 3 < 1.8 .$ Constraining the ratio between the axial spacing of the fifth and sixth lenses L5 and L6 in the short focal-length state and that spacing in the long focal-length state enables the second and third lens groups G2 and G3 to provide continuous focal-length variation through appropriate refractive-power distribution. The spacing ratio also controls ray-deflection angles and paths and reduces accumulation of aberrations, including field curvature, distortion, and chromatic aberration, during zooming.

In some embodiments, the optical lens 100 satisfies: $1 < SD 11 / SD 82 < 1.15 ,$ where SD11 is a maximum effective aperture radius of the object-side surface S1 of the first lens L1, and SD82 is a maximum effective aperture radius of the image-side surface S16 of the eighth lens L8. Because the first lens L1 primarily converges rays, a larger aperture of the first lens L1 improves light collection but also increases the overall size of the optical lens 100. The relationship maintains the apertures of the object-side surface S1 and the image-side surface S16 within appropriate ranges, thereby providing a large field of view while maintaining a compact configuration of the optical lens 100.

In some embodiments, the optical lens 100 satisfies: $1.2 < SDmax / SDmin < 1.4 ,$ where SDmax is a maximum among the maximum effective aperture radii of the object-side and image-side surfaces of the first through eighth lenses L1 through L8, and SDmin is a minimum among those maximum effective aperture radii. Controlling the ratio between the maximum and minimum values keeps ray deflection and lens dimensions within appropriate ranges, improves moldability and manufacturing stability of the lenses, and reduces sensitivity to manufacturing tolerances.

In some embodiments, the optical lens 100 satisfies: $1.1 < \left(SAG11+SAG12\right) / CT 6 < 1.9 ,$ where SAG11 is an axial displacement, along the optical axis, between an intersection of the object-side surface S1 of the first lens L1 with the optical axis and a point on the object-side surface S1 at its maximum effective aperture radius, SAG12 is an axial displacement, along the optical axis, between an intersection of the image-side surface S2 of the first lens L1 with the optical axis and a point on the image-side surface S2 at its maximum effective aperture radius, and CT6 is a center thickness of the sixth lens L6 along the optical axis. The relationship constrains the curvature of the first lens L1 relative to the thickness of the sixth lens L6. As the first lens of the third lens group G3, the sixth lens L6 has a thickness that affects inertia during movement and spacing-adjustment precision of the third lens group G3, while the surface profile of the first lens L1 determines initial angles of incident rays. The relationship enables the first lens L1 to converge rays with appropriate curvature while avoiding undesirable ray-path deviations during zooming that could result from an unsuitable thickness of the sixth lens L6. Coupled aberrations, such as coma and astigmatism, can therefore be reduced, improving imaging consistency and optical stability over the entire focal-length range.

In some embodiments, the optical lens 100 satisfies: $1.2 < TDz 1 / TDz 3 < 1.35 ,$ where TDz1 is an axial distance from the object-side surface S1 of the first lens L1 to the image-side surface S16 of the eighth lens L8 in the short focal-length state, and TDz3 is the corresponding axial distance in the long focal-length state. Constraining the ratio between the axial extents of the first through eighth lenses L1 through L8 in the short and long focal-length states limits variation in the overall axial length of the optical lens 100 during zooming and balances zoom ratio with compactness. Controlling this total-length variation also enables the relative displacements of the lens groups, particularly the movable second and third lens groups G2 and G3, to correspond to the refractive-power distribution required during zooming.

In some embodiments, the optical lens 100 satisfies: $1.5 < CT 3 / AT 34 < 4 ,$ where CT3 is a thickness of the third lens L3 along the optical axis, and AT34 is an axial spacing from the image-side surface S6 of the third lens L3 to the object-side surface S7 of the fourth lens L4. The relationship appropriately controls the thickness of the third lens L3 and an air gap between the third and fourth lenses L3 and L4. Rays can exit the third lens L3 smoothly and enter the fourth lens L4 at appropriate incidence angles. The relationship also facilitates high relative illumination at peripheral fields and reduces a difference in illumination between the center and peripheral fields of the imaging plane.

In some embodiments, the optical lens 100 satisfies: $0.6 < CT 5 / CT 3 < 2.3 ,$ where CT5 is a thickness of the fifth lens L5 along the optical axis. The relationship provides desirable thickness uniformity between the third and fifth lenses L3 and L5, reduces sensitivity of the optical lens 100 to thickness variations, and facilitates balancing field curvature.

In some embodiments, the optical lens 100 satisfies: $1.2 < FNOz 3 / FNOz 1 < 1.4 ,$ where FNOz3 is an F-number of the optical lens 100 in the long focal-length state, and FNOz1 is an F-number of the optical lens 100 in the short focal-length state. The relationship provides sufficient light throughput in both the long and short focal-length states, thereby facilitating high-definition imaging.

In some embodiments, the optical lens 100 satisfies: $1.3 < FOVz 1 / FOVz 3 < 1.5 ,$ where FOVz1 is a maximum field-of-view angle of the optical lens 100 in the short focal-length state, and FOVz3 is a maximum field-of-view angle of the optical lens 100 in the long focal-length state. The relationship provides a wide variation in field of view and increases the range of suitable imaging scenarios.

In some embodiments, the optical lens 100 satisfies: $1.3 < fz 3 / fz 1 < 1.5 ,$ where fz3 is a focal length of the optical lens 100 in the long focal-length state, and fz1 is a focal length of the optical lens 100 in the short focal-length state. Appropriately configuring the ratio between the focal lengths in the long and short focal-length states provides a relatively high zoom ratio and a wider range of imaging magnifications, thereby maintaining zoom performance and focal-length coverage.

In some embodiments, the optical lens 100 satisfies: $2.4 < GL 2 / GL 1 < 3.7 ,$ where GL2 is a length of the second lens group G2 along the optical axis, and GL1 is a length of the first lens group G1 along the optical axis. The relationship facilitates appropriate allocation of axial space and provides sufficient travel space for zooming.

In some embodiments, the optical lens 100 satisfies: $1.4 < GL 2 / GL 3 < 2.5 ,$ where GL3 is a length of the third lens group G3 along the optical axis. Matching the axial dimensions of the second and third lens groups G2 and G3 facilitates aberration balancing and improves imaging quality.

In some embodiments, the optical lens 100 satisfies: $1.2 < GL 3 / GL 1 < 1.8 .$ Constraining the ratio between the axial lengths of the third and first lens groups G3 and G1 coordinates structural proportions of the fixed and movable lens groups and balances refractive-power distribution with zoom performance.

In some embodiments, the first through eighth lenses L1 through L8 are formed of glass, thereby providing satisfactory optical performance and reducing temperature effects on the lenses. In some embodiments, some of the first through eighth lenses L1 through L8 are formed of glass and others are formed of plastic. This mixed-material configuration reduces temperature effects to provide satisfactory imaging while reducing the manufacturing cost and weight of the lenses and, consequently, the cost and overall weight of the optical lens 100. In some embodiments, each of the first through eighth lenses L1 through L8 is formed of plastic to reduce weight and cost.

In some embodiments, the object-side surface and the image-side surface of each of the first through eighth lenses L1 through L8 are aspheric to increase surface-design freedom and maintain imaging quality. In some embodiments, the object-side surface and the image-side surface of each lens are spherical. In some embodiments, some surfaces of the first through eighth lenses L1 through L8 are aspheric and others are spherical.

In some embodiments, the optical lens 100 further includes a stop STO. The stop STO may be an aperture stop, a field stop, or both an aperture stop and a field stop. In the illustrated embodiment, the stop STO is disposed on an object side of the third lens L3. In other embodiments, the stop STO may be disposed at another position selected according to implementation requirements.

In some embodiments, the optical lens 100 further includes an optical filter IR disposed between the eighth lens L8 and the imaging plane IMG. The optical filter IR may be an infrared-cut filter that blocks infrared light and other light outside a visible transmission band while transmitting visible light, such that a resulting image more closely corresponds to human visual perception.

Alternatively, the optical filter IR may be an infrared band-pass filter that blocks visible light and other light outside an infrared transmission band while transmitting infrared light, thereby improving imaging quality.

The optical filter IR may be formed of glass, coated optical glass, or another suitable material selected according to implementation requirements.

### FIRST EMBODIMENT

Referring to FIGS. 1, 3, and 5, the optical lens 100 according to this embodiment includes, in sequence from an object side to an image side along an optical axis, a first lens L1, a second lens L2, a third lens L3, a fourth lens L4, a fifth lens L5, a sixth lens L6, a seventh lens L7, and an eighth lens L8.

The first lens L1 has positive refractive power. Near the optical axis, an object-side surface S1 of the first lens L1 is convex, and an image-side surface S2 thereof is concave. The second lens L2 has negative refractive power. Near the optical axis, an object-side surface S3 and an image-side surface S4 of the second lens L2 are concave. The third lens L3 has positive refractive power. Near the optical axis, an object-side surface S5 and an image-side surface S6 of the third lens L3 are convex. The fourth lens L4 has negative refractive power. Near the optical axis, an object-side surface S7 and an image-side surface S8 of the fourth lens L4 are concave. The fifth lens L5 has positive refractive power. Near the optical axis, an object-side surface S9 and an image-side surface S10 of the fifth lens L5 are convex. The sixth lens L6 has negative refractive power. Near the optical axis, an object-side surface S11 and an image-side surface S12 of the sixth lens L6 are concave. The seventh lens L7 has positive refractive power. Near the optical axis, an object-side surface S13 and an image-side surface S14 of the seventh lens L7 are convex. The eighth lens L8 has negative refractive power. Near the optical axis, an object-side surface S15 of the eighth lens L8 is convex, and an image-side surface S16 thereof is concave.

The optical lens 100 further includes an aperture stop STO and an optical filter IR. In the illustrated embodiment, the aperture stop STO is disposed on an object side of the third lens L3. In other embodiments, the aperture stop STO may be spaced apart from a lens surface and may be disposed, for example, between the first lens L1 and the second lens L2 or on an object side of the first lens L1. The optical filter IR may be an infrared-cut filter formed of coated glass and disposed between the eighth lens L8 and an imaging plane IMG. In other embodiments, the optical filter IR may be a dual-band filter, an infrared filter, or another suitable filter, and may be formed of another suitable material, such as plastic.

The imaging plane IMG of the optical lens 100 is located on the image side of the optical lens 100. When the optical lens 100 is installed in a camera module, the imaging plane IMG coincides with an effective pixel region of an image sensor.

The first lens L1 and the second lens L2 of the optical lens 100 are fixed relative to each other to form a first lens group G1. The third lens L3 through the fifth lens L5 are fixed relative to one another to form a second lens group G2. The sixth lens L6 through the eighth lens L8 are fixed relative to one another to form a third lens group G3. The first lens group G1 is fixed relative to the imaging plane IMG. The second lens group G2 and the third lens group G3 move along the optical axis between the first lens group G1 and the imaging plane IMG to vary the focal length of the optical lens 100. In this embodiment, the optical filter IR is fixed relative to the third lens group G3 to facilitate assembly of the optical lens 100.

Table 1 shows parameters of the optical lens 100 according to this embodiment. Surface Nos. 1 and 2 respectively identify the object-side surface S1 and the image-side surface S2 of the first lens L1. Thus, for each lens, a surface having the smaller surface number is the object-side surface and a surface having the larger surface number is the image-side surface; the same convention applies to the other lenses. Focal lengths and material refractive indices are evaluated at a reference wavelength of 555 nm, and Abbe numbers are as listed. The Y radius is the radius of curvature, at the optical axis, of the object-side surface or image-side surface identified by the corresponding surface number. For each lens, the Thickness value in the row for its object-side surface is the axial center thickness of the lens, and the Thickness value in the row for its image-side surface is the axial distance to the next listed optical surface, which may be the object-side surface of the next lens or the aperture-stop plane. The Thickness entry in the aperture-stop row is a signed axial distance from the aperture-stop plane to the next listed surface. The Y radius, thickness, and focal length are expressed in millimeters (mm).

**TABLE 1**

| **Surface No.** | **Surface Name** | **Surface Type** | **Y Radius (mm)** | **Thickness (mm)** | **Material** | **Refractive Index** | **Abbe Number** | **Focal Length (mm)** |
|---|---|---|---|---|---|---|---|---|
| OBJ | Object | Spherical | Infinity | Infinity | | | | |
| 1 | First lens L1 | Aspheric | 9.302 | 1.322 | Plastic | 1.592 | 28.390 | 46.313 |
| 2 | First lens L1 | Aspheric | 13.337 | 0.893 | | | | |
| 3 | Second lens L2 | Spherical | -206.712 | 0.650 | Glass | 1.807 | 46.574 | -19.213 |
| 4 | Second lens L2 | Spherical | 16.789 | A | | | | |
| STO | Aperture stop | Spherical | Infinity | -1.327 | | | | |
| 5 | Third lens L3 | Aspheric | 7.252 | 2.363 | Glass | 1.498 | 81.558 | 14.009 |
| 6 | Third lens L3 | Aspheric | -165.391 | 1.019 | | | | |
| 7 | Fourth lens L4 | Aspheric | -53.644 | 0.650 | Plastic | 1.620 | 25.935 | -18.090 |
| 8 | Fourth lens L4 | Aspheric | 14.233 | 0.050 | | | | |
| 9 | Fifth lens L5 | Aspheric | 8.036 | 5.000 | Plastic | 1.537 | 55.774 | 10.914 |
| 10 | Fifth lens L5 | Aspheric | -16.893 | B | | | | |
| 11 | Sixth lens L6 | Aspheric | -90.125 | 0.651 | Plastic | 1.546 | 55.932 | -16.105 |
| 12 | Sixth lens L6 | Aspheric | 9.770 | 1.048 | | | | |
| 13 | Seventh lens L7 | Aspheric | 24.606 | 1.228 | Plastic | 1.620 | 25.935 | 20.136 |
| 14 | Seventh lens L7 | Aspheric | -24.819 | 0.576 | | | | |
| 15 | Eighth lens L8 | Aspheric | 22.439 | 0.767 | Plastic | 1.546 | 55.932 | -14.118 |
| 16 | Eighth lens L8 | Aspheric | 5.669 | 1.000 | | | | |
| 17 | Optical filter IR | Spherical | Infinity | 0.210 | Glass | 1.518 | 64.166 | |
| 18 | Optical filter IR | Spherical | Infinity | C | | | | |
| IMG | Imaging plane | Spherical | Infinity | 0.000 | | | | |

Table 2 supplements Table 1 and provides values of variable parameters when the optical lens 100 is in a short focal-length state Z1, an intermediate focal-length state Z2, and a long focal-length state Z3.

**TABLE 2**

| **State** | **A (mm)** | **B (mm)** | **C (mm)** | **FNO** | **TTL (mm)** | **FOV (deg.)** | **ImgH (mm)** | **f (mm)** |
|---|---|---|---|---|---|---|---|---|
| Short focal-length state (Z1) | 5.524 | 3.056 | 3.459 | 2.29 | 28.14 | 34.1 | 5.72 | 18.49 |
| Intermediate focal-length state (Z2) | 3.783 | 2.250 | 6.008 | 2.66 | 28.14 | 28.4 | 5.72 | 22.46 |
| Long focal-length state (Z3) | 2.077 | 1.800 | 8.164 | 3 | 28.14 | 24.2 | 5.72 | 26.42 |

FNO denotes the F-number of the optical lens 100; TTL denotes an axial distance from the object-side surface S1 of the first lens L1 to the imaging plane IMG; FOV denotes a maximum field-of-view angle of the optical lens 100; ImgH denotes a maximum image height equal to one half of a diagonal dimension of an effective pixel region of an image sensor; and f denotes a focal length of the optical lens 100. In each prescription table, A denotes an axial distance from the image-side surface S4 of the second lens L2 to the separate aperture-stop plane STO, B denotes an axial distance from the image-side surface S10 of the fifth lens L5 to the object-side surface S11 of the sixth lens L6, and C denotes an axial distance from surface No. 18, which is the image-side surface of the optical filter IR, to the imaging plane IMG. A complete air interval Az from S4 to S5 is determined from A together with the listed signed axial interval from STO to S5 under the sign convention of the prescription table.

As shown in Table 2, when the optical lens 100 changes from the short focal-length state Z1 to the long focal-length state Z3, both the second lens group G2 and the third lens group G3 move along the optical axis toward the first lens group G1. When the optical lens 100 changes from the long focal-length state Z3 to the short focal-length state Z1, both the second lens group G2 and the third lens group G3 move along the optical axis toward the imaging plane IMG.

Table 2 merely provides example data for three zoom states of the optical lens 100. The focal length of the optical lens 100 varies continuously between the illustrated zoom states, and the optical lens 100 is capable of imaging throughout the continuous zoom range.

In this embodiment, some lens surfaces are aspheric and the remaining lens surfaces are spherical. In other embodiments, the surfaces of the first lens L1 through the eighth lens L8 may all be spherical or may all be aspheric. The aspheric surfaces in this embodiment may be defined by, but are not limited to, the following aspheric-surface equation:$x = {ch}^{2} / \left[1+√\left(1-\left(k+1\right){c}^{2}{h}^{2}\right)\right] + \sum \left(i=4,6…,26\right) {A}_{i} {h}^{i}$

In the equation, x is the distance from a corresponding point on an aspheric surface to a plane tangent to the surface vertex; h is the distance from the corresponding point on the aspheric surface to the optical axis; c is the curvature at the vertex of the aspheric surface; k is a conic constant; and Aᵢ is a coefficient of an i-th-order term, where i = 4, 6, ..., 26. Table 3 provides higher-order coefficients A4, A6, A8, A10, A12, A14, A16, A18, A20, A22, A24, andA26 that may be used for the aspheric surfaces S1, S2, S5, S6, S7, S8, S9, S10, S11, S12, S13, S14, S15, and S16 of the first embodiment.

**TABLE 3 - ASPHERIC COEFFICIENTS (PART 1 OF 3)**

| **Surface No.** | **K** | **A4** | **A6** | **A8** | **A10** |
|---|---|---|---|---|---|
| 1 | 1.91824E-01 | 3.86594E-05 | -2.96352E-06 | 1.94646E-06 | -3.78673E-07 |
| 2 | 4.87403E-02 | 6.80686E-05 | 1.78513E-05 | -3.89303E-06 | 6.75463E-07 |
| 5 | -1.17023E-01 | -2.88802E-05 | 1.25709E-05 | -3.12472E-06 | 3.34209E-07 |
| 6 | 0.00000E+00 | -4.57499E-05 | 4.54659E-05 | -1.15235E-05 | 1.22787E-06 |
| 7 | 0.00000E+00 | -1.79962E-04 | 1.37188E-04 | -3.88455E-05 | 5.37675E-06 |
| 8 | 0.00000E+00 | -9.14969E-05 | 1.46792E-04 | -5.08809E-05 | 8.26699E-06 |
| 9 | -4.41462E+00 | 7.15524E-04 | 2.52498E-05 | -2.26191E-05 | 4.67200E-06 |
| 10 | -3.06475E+01 | -5.20343E-05 | -4.52655E-05 | 3.19178E-05 | -7.73272E-06 |
| 11 | 0.00000E+00 | 2.74289E-03 | -1.44997E-03 | 6.09438E-04 | -1.37611E-04 |
| 12 | 0.00000E+00 | 2.88310E-03 | -2.54869E-03 | 8.91942E-04 | -1.44070E-04 |
| 13 | 0.00000E+00 | 3.44783E-03 | -3.14820E-03 | 9.88366E-04 | -2.79342E-04 |
| 14 | 2.79515E+01 | 4.88724E-03 | -3.99799E-03 | 1.22345E-03 | -2.81783E-04 |
| 15 | 0.00000E+00 | -1.27146E-02 | -1.12838E-03 | 6.96008E-04 | -1.48541E-04 |
| 16 | -1.35187E+01 | -7.56500E-03 | 5.52696E-05 | 2.29091E-04 | -5.11241E-05 |

**TABLE 3 - ASPHERIC COEFFICIENTS (PART 2 OF 3)**

| **Surface No.** | **A12** | **A14** | **A16** | **A18** | **A20** |
|---|---|---|---|---|---|
| 1 | 4.88752E-08 | -3.91617E-09 | 1.87930E-10 | -4.92298E-12 | 5.41761E-14 |
| 2 | -6.58869E-08 | 3.67262E-09 | -1.06122E-10 | 1.10784E-12 | 5.37687E-15 |
| 5 | -2.28583E-08 | 9.44882E-10 | -1.78458E-11 | 0.00000E+00 | 0.00000E+00 |
| 6 | -6.65999E-08 | 1.87701E-09 | -2.47592E-11 | 0.00000E+00 | 0.00000E+00 |
| 7 | -3.93621E-07 | 1.47654E-08 | -2.25822E-10 | 0.00000E+00 | 0.00000E+00 |
| 8 | -7.14503E-07 | 3.13476E-08 | -5.45629E-10 | 0.00000E+00 | 0.00000E+00 |
| 9 | -5.10460E-07 | 3.13593E-08 | -1.09756E-09 | 2.29111E-11 | -2.71569E-13 |
| 10 | 1.14965E-06 | -1.07837E-07 | 6.19771E-09 | -1.98046E-10 | 2.68526E-12 |
| 11 | 1.91083E-05 | -1.67241E-06 | 9.00103E-08 | -2.72268E-09 | 3.53095E-11 |
| 12 | 5.94803E-06 | 2.10372E-06 | -4.72251E-07 | 4.92277E-08 | -2.96714E-09 |
| 13 | 8.04901E-05 | -1.91544E-05 | 3.25463E-06 | -3.79695E-07 | 2.98083E-08 |
| 14 | 5.89085E-05 | -1.02982E-05 | 1.30128E-06 | -1.09775E-07 | 5.83493E-09 |
| 15 | 2.72441E-05 | -4.84369E-06 | 6.58912E-07 | -5.88662E-08 | 3.21513E-09 |
| 16 | 5.83770E-06 | -3.98545E-07 | 1.63556E-08 | -3.72530E-10 | 3.61880E-12 |

**TABLE 3 - ASPHERIC COEFFICIENTS (PART 3 OF 3)**

| **Surface No.** | **A22** | **A24** | **A26** |
|---|---|---|---|
| 12 | 9.98364E-11 | -1.46478E-12 | 0.00000E+00 |
| 13 | -1.50924E-09 | 4.45943E-11 | -5.84820E-13 |
| 14 | -1.76943E-10 | 2.34015E-12 | 0.00000E+00 |
| 15 | -9.74035E-11 | 1.25547E-12 | 0.00000E+00 |

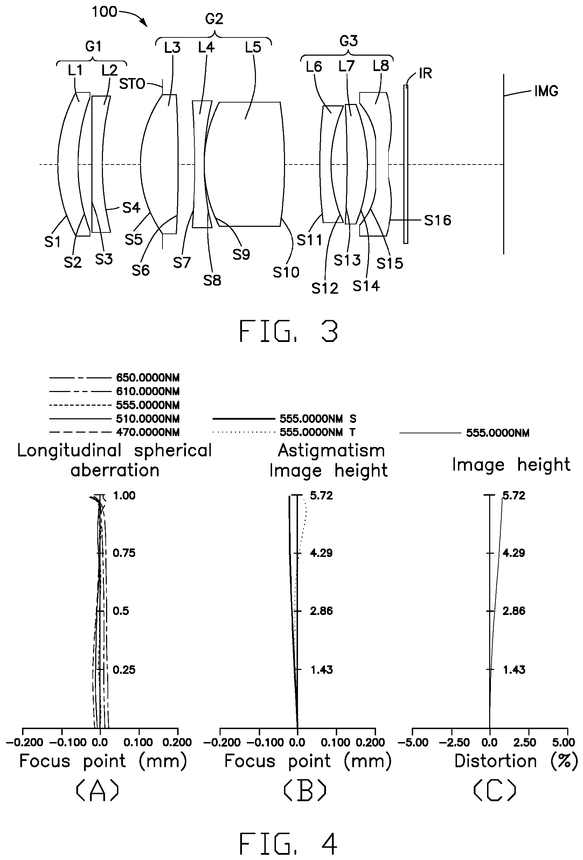

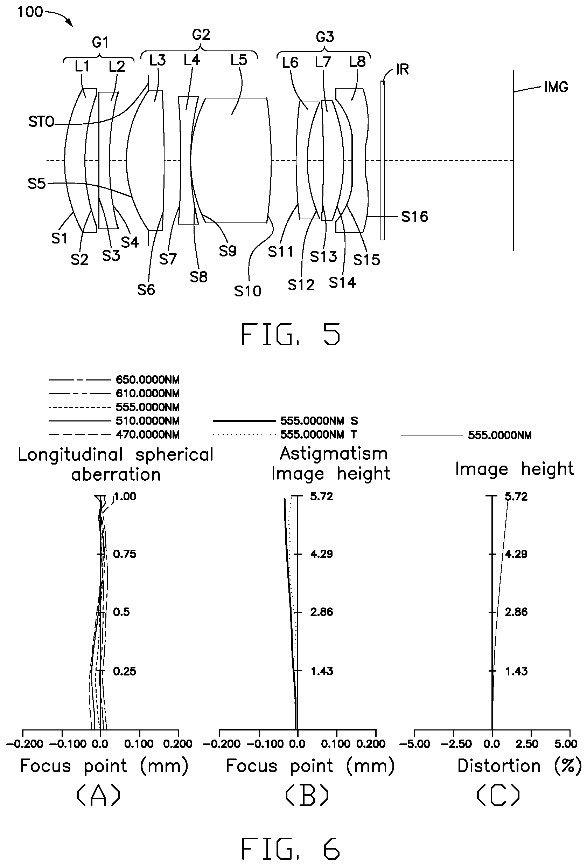

**FIG.** 2(A) shows longitudinal spherical-aberration curves of the optical lens 100 according to the first embodiment in the short focal-length state Z1; FIG. 4(A) shows longitudinal spherical-aberration curves in the intermediate focal-length state Z2; and FIG. 6(A) shows longitudinal spherical-aberration curves in the long focal-length state Z3. The reference wavelengths are 650.0000 nm, 610.0000 nm, 555.0000 nm, 510.0000 nm, and 470.0000 nm. The horizontal axis represents focal shift, and the vertical axis represents a normalized pupil coordinate. The longitudinal spherical-aberration curves represent deviations among convergence locations of rays at the different wavelengths after the rays pass through the lenses of the optical lens 100. The plots show that the optical lens 100 according to the first embodiment has favorable spherical-aberration performance and thus favorable imaging quality.

**FIG.** 2(B) shows astigmatism curves at a wavelength of 555.0000 nm for the optical lens 100 according to the first embodiment in the short focal-length state Z1; FIG. 4(B) shows corresponding curves in the intermediate focal-length state Z2; and FIG. 6(B) shows corresponding curves in the long focal-length state Z3. The horizontal axis represents focal shift, and the vertical axis represents image height in millimeters (mm). In each astigmatism plot, T represents tangential field curvature, and S represents sagittal field curvature, each relative to the imaging plane IMG. The plots show that astigmatism of the optical lens 100 is favorably corrected.

**FIG.** 2(C) shows a distortion curve at a wavelength of 555.0000 nm for the optical lens 100 according to the first embodiment in the short focal-length state Z1; FIG. 4(C) shows a corresponding curve in the intermediate focal-length state Z2; and FIG. 6(C) shows a corresponding curve in the long focal-length state Z3. The horizontal axis represents distortion in percent, and the vertical axis represents image height. Each distortion curve represents distortion at different field angles. The plots show that distortion of the optical lens 100 is favorably corrected at the indicated wavelength.

Accordingly, the optical lens 100 according to this embodiment has small aberrations and favorable imaging quality.

### SECOND EMBODIMENT

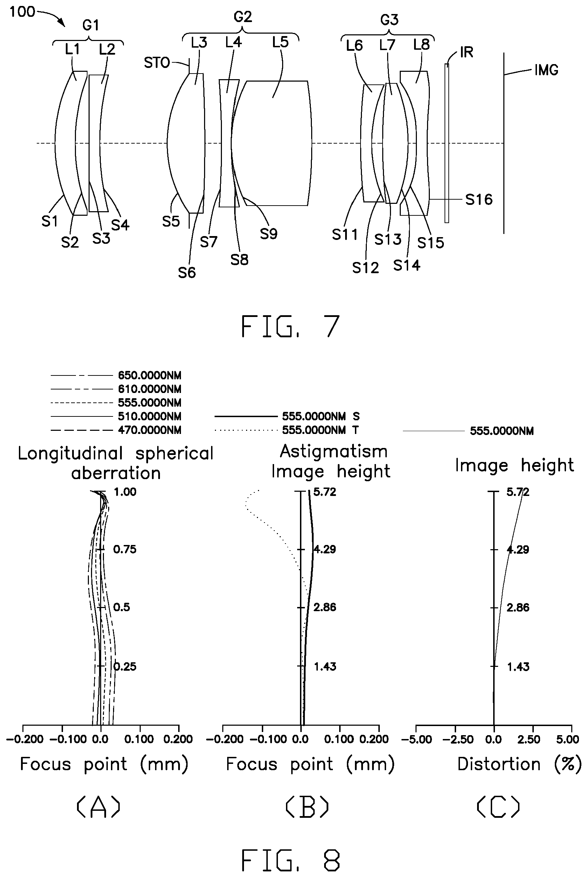

Referring to FIG. 7, the second embodiment differs from the first embodiment in that the object-side surface S11 of the sixth lens L6 is convex near the optical axis. The remaining features of the second embodiment are the same as the corresponding features of the first embodiment and are not repeated.

Table 4 shows parameters of the optical lens 100 according to this embodiment. Focal lengths and material refractive indices are evaluated at a reference wavelength of 555 nm, and Abbe numbers are as listed. The Y radii, thicknesses, and focal lengths are expressed in millimeters (mm). The remaining parameters have the same meanings as the corresponding parameters of the first embodiment.

**TABLE 4**

| **Surface No.** | **Surface Name** | **Surface Type** | **Y Radius (mm)** | **Thickness (mm)** | **Material** | **Refractive Index** | **Abbe Number** | **Focal Length (mm)** |
|---|---|---|---|---|---|---|---|---|
| OBJ | Object | Spherical | Infinity | Infinity | | | | |
| 1 | First lens L1 | Aspheric | 8.700 | 1.571 | Plastic | 1.592 | 28.390 | 35.391 |
| 2 | First lens L1 | Aspheric | 13.884 | 0.918 | | | | |
| 3 | Second lens L2 | Spherical | -102.371 | 1.000 | Glass | 1.807 | 46.574 | -15.910 |
| 4 | Second lens L2 | Spherical | 14.747 | A | | | | |
| STO | Aperture stop | Spherical | Infinity | -1.404 | | | | |
| 5 | Third lens L3 | Aspheric | 7.008 | 2.439 | Glass | 1.498 | 81.558 | 12.973 |
| 6 | Third lens L3 | Aspheric | -73.523 | 0.849 | | | | |
| 7 | Fourth lens L4 | Aspheric | -50.436 | 0.480 | Plastic | 1.620 | 25.935 | -16.026 |
| 8 | Fourth lens L4 | Aspheric | 12.407 | 0.050 | | | | |
| 9 | Fifth lens L5 | Aspheric | 7.657 | 4.627 | Plastic | 1.537 | 55.774 | 11.117 |
| 10 | Fifth lens L5 | Aspheric | -21.293 | B | | | | |
| 11 | Sixth lens L6 | Aspheric | 53.354 | 0.883 | Plastic | 1.546 | 55.932 | -23.299 |
| 12 | Sixth lens L6 | Aspheric | 10.213 | 0.649 | | | | |
| 13 | Seventh lens L7 | Aspheric | 16.112 | 1.089 | Plastic | 1.620 | 25.935 | 17.198 |
| 14 | Seventh lens L7 | Aspheric | -30.643 | 0.848 | | | | |
| 15 | Eighth lens L8 | Aspheric | 300.974 | 0.771 | Plastic | 1.546 | 55.932 | -9.521 |
| 16 | Eighth lens L8 | Aspheric | 5.106 | 1.000 | | | | |
| 17 | Optical filter IR | Spherical | Infinity | 0.210 | Glass | 1.518 | 64.166 | |
| 18 | Optical filter IR | Spherical | Infinity | C | | | | |
| IMG | Imaging plane | Spherical | Infinity | 0.000 | | | | |

Table 5 supplements Table 4 and provides values of variable parameters when the optical lens 100 is in the short focal-length state Z1, the intermediate focal-length state Z2, and the long focal-length state Z3.

**TABLE 5**

| **State** | **A (mm)** | **B (mm)** | **C (mm)** | **FNO** | **TTL (mm)** | **FOV (deg.)** | **ImgH (mm)** | **f (mm)** |
|---|---|---|---|---|---|---|---|---|
| Short focal-length state (Z1) | 5.389 | 3.081 | 3.441 | 2.33 | 27.89 | 33.30 | 5.72 | 18.80 |
| Intermediate focal-length state (Z2) | 3.783 | 2.250 | 5.876 | 2.73 | 27.89 | 27.50 | 5.72 | 23.00 |
| Long focal-length state (Z3) | 2.077 | 1.800 | 8.037 | 3.12 | 27.89 | 23.10 | 5.72 | 27.50 |

Table 6 provides higher-order coefficients for the aspheric surfaces of the second embodiment. Each aspheric surface profile may be defined by the equation provided in connection with the first embodiment.

**TABLE 6 - ASPHERIC COEFFICIENTS (PART 1 OF 3)**

| **Surface No.** | **K** | **A4** | **A6** | **A8** | **A10** |
|---|---|---|---|---|---|
| 1 | 1.73067E-01 | 3.19358E-05 | -2.96245E-06 | 1.95055E-06 | -3.78395E-07 |
| 2 | 1.18411E-16 | 7.16621E-05 | 1.79846E-05 | -3.88447E-06 | 6.75897E-07 |
| 5 | -1.01505E-01 | -1.77368E-05 | 1.25526E-05 | -3.11921E-06 | 3.34856E-07 |
| 6 | 4.03969E+01 | -4.80877E-05 | 4.58251E-05 | -1.15140E-05 | 1.22793E-06 |
| 7 | 6.42296E+00 | -1.84129E-04 | 1.36497E-04 | -3.88750E-05 | 5.37586E-06 |
| 8 | -1.21682E-02 | -8.83858E-05 | 1.47511E-04 | -5.08462E-05 | 8.26813E-06 |
| 9 | -4.37237E+00 | 7.14104E-04 | 2.47122E-05 | -2.26405E-05 | 4.67184E-06 |
| 10 | -3.78825E+01 | -2.20485E-05 | -4.60559E-05 | 3.17960E-05 | -7.73945E-06 |
| 11 | -9.90000E+01 | 2.67839E-03 | -1.45182E-03 | 6.09382E-04 | -1.37612E-04 |
| 12 | -3.45544E-01 | 4.07291E-03 | -3.34532E-03 | 1.09597E-03 | -1.61316E-04 |
| 13 | 1.42518E+01 | 3.65130E-03 | -2.40893E-03 | -8.28371E-05 | 3.75368E-04 |
| 14 | -9.90000E+01 | 5.57458E-03 | -4.79991E-03 | 1.82043E-03 | -5.23096E-04 |
| 15 | -9.90000E+01 | -1.41647E-02 | -2.57138E-03 | 2.27839E-03 | -8.70251E-04 |
| 16 | -1.32464E+01 | -8.82063E-03 | 9.21993E-04 | -1.70109E-05 | -7.95728E-06 |

**TABLE 6 - ASPHERIC COEFFICIENTS (PART 2 OF 3)**

| **Surface No.** | **A12** | **A14** | **A16** | **A18** | **A20** |
|---|---|---|---|---|---|
| 1 | 4.88856E-08 | -3.91586E-09 | 1.87937E-10 | -4.92259E-12 | 5.42222E-14 |
| 2 | -6.58620E-08 | 3.67401E-09 | -1.06057E-10 | 1.10976E-12 | 5.36654E-15 |
| 5 | -2.28101E-08 | 9.47192E-10 | -1.77537E-11 | 0.00000E+00 | 0.00000E+00 |
| 6 | -6.66059E-08 | 1.87714E-09 | -2.47174E-11 | 0.00000E+00 | 0.00000E+00 |
| 7 | -3.93652E-07 | 1.47631E-08 | -2.26026E-10 | 0.00000E+00 | 0.00000E+00 |
| 8 | -7.14471E-07 | 3.13497E-08 | -5.45448E-10 | 0.00000E+00 | 0.00000E+00 |
| 9 | -5.10444E-07 | 3.13618E-08 | -1.09742E-09 | 2.29129E-11 | -2.72127E-13 |
| 10 | 1.14931E-06 | -1.07850E-07 | 6.19743E-09 | -1.98031E-10 | 2.68868E-12 |
| 11 | 1.91086E-05 | -1.67236E-06 | 9.00170E-08 | -2.72261E-09 | 3.53612E-11 |
| 12 | 2.83369E-06 | 3.28026E-06 | -6.61653E-07 | 6.80564E-08 | -4.13413E-09 |
| 13 | -1.55456E-04 | 3.65850E-05 | -5.69147E-06 | 6.01062E-07 | -4.24372E-08 |
| 14 | 1.14604E-04 | -1.79344E-05 | 1.90735E-06 | -1.33054E-07 | 5.80347E-09 |
| 15 | 2.17426E-04 | -3.67032E-05 | 4.17140E-06 | -3.13533E-07 | 1.49212E-08 |
| 16 | 1.14129E-06 | -8.07439E-08 | 3.34243E-09 | -7.71661E-11 | 7.65247E-13 |

**TABLE 6 - ASPHERIC COEFFICIENTS (PART 3 OF 3)**

| **Surface No.** | **A22** | **A24** | **A26** |
|---|---|---|---|
| 12 | 1.40866E-10 | -2.08681E-12 | 0.00000E+00 |
| 13 | 1.90987E-09 | -4.93583E-11 | 5.55348E-13 |
| 14 | -1.43512E-10 | 1.54310E-12 | 0.00000E+00 |
| 15 | -4.06970E-10 | 4.84477E-12 | 0.00000E+00 |

FIGS. 8(A), 8(B), and 8(C) respectively show longitudinal spherical-aberration curves, astigmatism curves, and a distortion curve of the optical lens 100 according to the second embodiment in the short focal-length state Z1. The plots show that longitudinal spherical aberration, astigmatism, and distortion are favorably controlled, such that the optical lens 100 has favorable imaging quality. The wavelengths corresponding to the curves in FIGS. 8(A), 8(B), and 8(C) are the same as those described for FIGS. 2(A), 2(B), and 2(C).

### THIRD EMBODIMENT

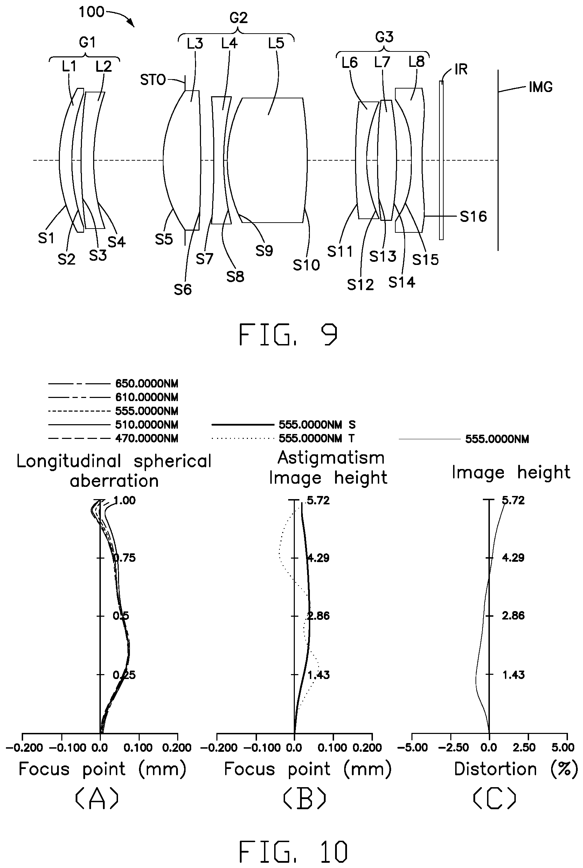

Referring to FIG. 9, the third embodiment differs from the first embodiment in that the object-side surface S3 of the second lens L2 is convex near the optical axis and the object-side surface S11 of the sixth lens L6 is convex near the optical axis. The remaining features of the third embodiment are the same as the corresponding features of the first embodiment and are not repeated.

Table 7 shows parameters of the optical lens 100 according to this embodiment. Focal lengths and material refractive indices are evaluated at a reference wavelength of 555 nm, and Abbe numbers are as listed. The Y radii, thicknesses, and focal lengths are expressed in millimeters (mm). The remaining parameters have the same meanings as the corresponding parameters of the first embodiment.

**TABLE 7**

| **Surf ace No.** | **Surface Name** | **Surface Type** | **Y Radius (mm)** | **Thickne ss (mm)** | **Materia l** | **Refracti ve Index** | **Abbe Numb er** | **Focal Length (mm)** |
|---|---|---|---|---|---|---|---|---|
| OBJ | Object | Spherical | Infinity | Infinity | Plastic | 1.592 | 28.390 | 35.391 |
| 1 | First lens L1 | Aspheric | 8.700 | 1.571 | | | | |
| 2 | First lens L1 | Aspheric | 13.884 | 0.918 | | | | |
| 3 | Second lens L2 | Spherical | -102.371 | 1.000 | Glass | 1.807 | 46.574 | -15.910 |
| 4 | Second lens L2 | Spherical | 14.747 | A | | | | |
| STO | Aperture stop | Spherical | Infinity | -1.404 | | | | |
| 5 | Third lens L3 | Aspheric | 7.008 | 2.439 | Glass | 1.498 | 81.558 | 12.973 |
| 6 | Third lens L3 | Aspheric | -73.523 | 0.849 | | | | |
| 7 | Fourth lens L4 | Aspheric | -50.436 | 0.480 | Plastic | 1.620 | 25.935 | -16.026 |
| 8 | Fourth lens L4 | Aspheric | 12.407 | 0.050 | | | | |
| 9 | Fifth lens L5 | Aspheric | 7.657 | 4.627 | Plastic | 1.537 | 55.774 | 11.117 |
| 10 | Fifth lens L5 | Aspheric | -21.293 | B | | | | |
| 11 | Sixth lens L6 | Aspheric | 53.354 | 0.883 | Plastic | 1.546 | 55.932 | -23.299 |
| 12 | Sixth lens L6 | Aspheric | 10.213 | 0.649 | | | | |
| 13 | Seventh lens L7 | Aspheric | 16.112 | 1.089 | Plastic | 1.620 | 25.935 | 17.198 |
| 14 | Seventh lens L7 | Aspheric | -30.643 | 0.848 | | | | |
| 15 | Eighth lens L8 | Aspheric | 300.974 | 0.771 | Plastic | 1.546 | 55.932 | -9.521 |
| 16 | Eighth lens L8 | Aspheric | 5.106 | 1.000 | | | | |
| 17 | Optical filter IR | Spherical | Infinity | 0.210 | Glass | 1.518 | 64.166 | |
| 18 | Optical filter IR | Spherical | Infinity | C | | | | |
| IMG | Imaging plane | Spherical | Infinity | 0.000 | | | | |

Table 8 supplements Table 7 and provides values of variable parameters when the optical lens 100 is in the short focal-length state Z1, the intermediate focal-length state Z2, and the long focal-length state Z3.

**TABLE 8**

| **State** | **A (mm)** | **B (mm)** | **C (mm)** | **FNO** | **TTL (mm)** | **FOV (deg.)** | **ImgH (mm)** | **f (mm)** |
|---|---|---|---|---|---|---|---|---|
| Short focal-length state (Z1) | 5.389 | 3.081 | 3.441 | 2.33 | 27.89 | 33.30 | 5.72 | 18.80 |
| Intermediate focal-length state (Z2) | 3.783 | 2.250 | 5.876 | 2.73 | 27.89 | 27.50 | 5.72 | 23.00 |
| Long focal-length state (Z3) | 2.077 | 1.800 | 8.037 | 3.12 | 27.89 | 23.10 | 5.72 | 27.50 |

Table 9 provides higher-order coefficients for the aspheric surfaces of the third embodiment. Each aspheric surface profile may be defined by the equation provided in connection with the first embodiment.

**TABLE 9 - ASPHERIC COEFFICIENTS (PART 1 OF 3)**

| **Surface No.** | **K** | **A4** | **A6** | **A8** | **A10** |
|---|---|---|---|---|---|
| 1 | 9.15737E-02 | -3.20960E-06 | -4.04796E-06 | 1.91771E-06 | -3.79472E-07 |
| 2 | -1.44752E-02 | 7.92258E-05 | 1.74171E-05 | -3.92117E-06 | 6.75002E-07 |
| 5 | -1.26069E-01 | -3.93173E-05 | 1.24499E-05 | -3.11976E-06 | 3.34324E-07 |
| 6 | 9.90405E+00 | -3.98959E-05 | 4.55073E-05 | -1.15331E-05 | 1.22727E-06 |
| 7 | 5.41057E+00 | -1.82453E-04 | 1.37157E-04 | -3.88512E-05 | 5.37635E-06 |
| 8 | -2.04863E-01 | -9.68537E-05 | 1.46515E-04 | -5.08951E-05 | 8.26691E-06 |
| 9 | -4.35005E+00 | 7.25325E-04 | 2.59707E-05 | -2.25858E-05 | 4.67401E-06 |
| 10 | -3.28591E+01 | -1.78922E-05 | -4.27922E-05 | 3.20402E-05 | -7.72617E-06 |
| 11 | -2.95322E+01 | 2.69809E-03 | -1.45235E-03 | 6.09360E-04 | -1.37608E-04 |
| 12 | -1.04897E+00 | 1.00204E-02 | -1.07532E-02 | 5.72800E-03 | -1.97473E-03 |
| 13 | 1.42999E+01 | 2.36494E-03 | 5.59507E-04 | -3.16897E-03 | 2.13433E-03 |
| 14 | -9.90000E+01 | 5.31037E-03 | -3.72090E-03 | 9.48451E-04 | -9.12849E-05 |
| 15 | -9.90000E+01 | -1.11429E-02 | -1.19915E-02 | 9.00425E-03 | -3.49471E-03 |
| 16 | -1.57920E+01 | -1.17022E-02 | 1.67962E-03 | -9.27593E-05 | -1.10870E-05 |

**TABLE 9 - ASPHERIC COEFFICIENTS (PART 2 OF 3)**

| **Surface No.** | **A12** | **A14** | **A16** | **A18** | **A20** |
|---|---|---|---|---|---|
| 1 | 4.88544E-08 | -3.91645E-09 | 1.87898E-10 | -4.92322E-12 | 5.42195E-14 |
| 2 | -6.58965E-08 | 3.67255E-09 | -1.06128E-10 | 1.10679E-12 | 5.18847E-15 |
| 5 | -2.28395E-08 | 9.47175E-10 | -1.77206E-11 | 0.00000E+00 | 0.00000E+00 |
| 6 | -6.66603E-08 | 1.87415E-09 | -2.51166E-11 | 0.00000E+00 | 0.00000E+00 |
| 7 | -3.93635E-07 | 1.47620E-08 | -2.25913E-10 | 0.00000E+00 | 0.00000E+00 |
| 8 | -7.14473E-07 | 3.13512E-08 | -5.45401E-10 | 0.00000E+00 | 0.00000E+00 |
| 9 | -5.10394E-07 | 3.13623E-08 | -1.09774E-09 | 2.28945E-11 | -2.72903E-13 |
| 10 | 1.14993E-06 | -1.07824E-07 | 6.19850E-09 | -1.97980E-10 | 2.69239E-12 |
| 11 | 1.91094E-05 | -1.67228E-06 | 9.00249E-08 | -2.72198E-09 | 3.54090E-11 |
| 12 | 4.70386E-04 | -7.78734E-05 | 8.87233E-06 | -6.79553E-07 | 3.33477E-08 |
| 13 | -7.78278E-04 | 1.81908E-04 | -2.86363E-05 | 3.06666E-06 | -2.20108E-07 |
| 14 | -2.21539E-05 | 1.02044E-05 | -1.89635E-06 | 2.02089E-07 | -1.27151E-08 |
| 15 | 8.66366E-04 | -1.43970E-04 | 1.61921E-05 | -1.21502E-06 | 5.82221E-08 |
| 16 | 2.65499E-06 | -2.34578E-07 | 1.09733E-08 | -2.68845E-10 | 2.72032E-12 |

**TABLE 9 - ASPHERIC COEFFICIENTS (PART 3 OF 3)**

| **Surface No.** | **A22** | **A24** | **A26** |
|---|---|---|---|
| 12 | -9.45831E-10 | 1.17757E-11 | 0.00000E+00 |
| 13 | 1.01260E-08 | -2.69713E-10 | 3.16109E-12 |
| 14 | 4.38725E-10 | -6.39917E-12 | 0.00000E+00 |
| 15 | -1.61088E-09 | 1.95798E-11 | 0.00000E+00 |

FIGS. 10(A), 10(B), and 10(C) respectively show longitudinal spherical-aberration curves, astigmatism curves, and a distortion curve of the optical lens 100 according to the third embodiment in the short focal-length state Z1. The plots show that longitudinal spherical aberration, astigmatism, and distortion are favorably controlled, such that the optical lens 100 has favorable imaging quality. The wavelengths corresponding to the curves in FIGS. 10(A), 10(B), and 10(C) are the same as those described for FIGS. 2(A), 2(B), and 2(C).

### FOURTH EMBODIMENT

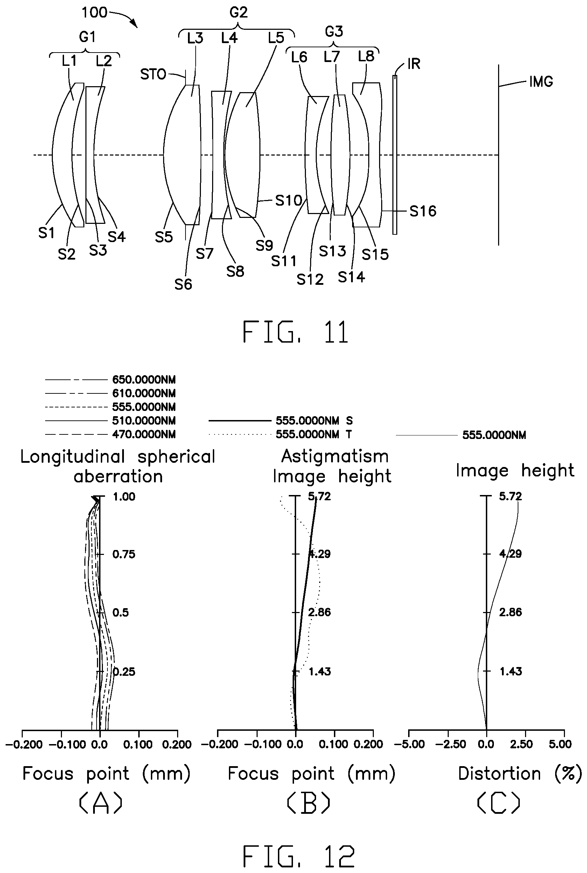

Referring to FIG. 11, the fourth embodiment differs from the first embodiment in that the image-side surface S6 of the third lens L3 is concave near the optical axis, the object-side surface S7 of the fourth lens L4 is convex near the optical axis, and the object-side surface S11 of the sixth lens L6 is convex near the optical axis. The remaining features are as described in the first embodiment.

Table 10 shows parameters of the optical lens 100 according to this embodiment. Focal lengths and material refractive indices are evaluated at a reference wavelength of 555 nm, and Abbe numbers are as listed. The Y radii, thicknesses, and focal lengths are expressed in millimeters (mm). The remaining parameters have the same meanings as the corresponding parameters of the first embodiment.

**TABLE 10**

| **Surf ace No.** | **Surface Name** | **Surface Type** | **Y Radius (mm)** | **Thick ness (mm)** | **Materi al** | **Refract ive Index** | Abbe **Numb er** | **Focal Length (mm)** |
|---|---|---|---|---|---|---|---|---|
| OBJ | Object | Spheric al | Infinity | Infinity | | | | |
| 1 | First lens L1 | Aspheri c | 7.737 | 1.233 | Plastic | 1.592 | 28.390 | 30.045 |
| 2 | First lens L1 | Aspheri c | 12.887 | 0.883 | | | | |
| 3 | Second lens L2 | Spheric al | -263.554 | 0.400 | Glass | 1.807 | 46.574 | -15.230 |
| 4 | Second lens L2 | Spheric al | 12.903 | A | | | | |
| STO | Aperture stop | Spheric al | Infinity | -1.955 | | | | |
| 5 | Third lens L3 | Aspheri c | 5.817 | 2.858 | Glass | 1.498 | 81.558 | 11.677 |
| 6 | Third lens L3 | Aspheri c | 33872.50 2 | 0.950 | | | | |
| 7 | Fourth lens L4 | Aspheri c | 2482.985 | 0.480 | Plastic | 1.620 | 25.935 | -14.184 |
| 8 | Fourth lens L4 | Aspheri c | 8.756 | 0.050 | | | | |
| 9 | Fifth lens L5 | Aspheri c | 6.790 | 1.852 | Plastic | 1.537 | 55.774 | 10.748 |
| 10 | Fifth lens L5 | Aspheri c | -34.605 | B | | | | |
| 11 | Sixth lens L6 | Aspheri c | 49.621 | 0.500 | Plastic | 1.546 | 55.932 | -23.155 |
| 12 | Sixth lens L6 | Aspheri c | 10.041 | 0.881 | | | | |
| 13 | Seventh lens L7 | Aspheri c | 15.534 | 1.005 | Plastic | 1.620 | 25.935 | 21.542 |
| 14 | Seventh lens L7 | Aspheri c | -92.422 | 1.361 | | | | |
| 15 | Eighth lens L8 | Aspheri c | 112.788 | 0.550 | Plastic | 1.546 | 55.932 | -10.294 |
| 16 | Eighth lens L8 | Aspheri c | 5.345 | 1.000 | | | | |
| 17 | Optical filter IR | Spheric al | Infinity | 0.210 | Glass | 1.518 | 64.166 | |
| 18 | Optical filter IR | Spheric al | Infinity | C | | | | |
| IMG | Imaging plane | Spheric al | Infinity | 0.000 | | | | |

Table 11 supplements Table 10 and provides values of variable parameters when the optical lens 100 is in the short focal-length state Z1, the intermediate focal-length state Z2, and the long focal-length state Z3.

**TABLE 11**

| **State** | **A (mm)** | **B (mm)** | **C (mm)** | **FNO** | **TTL (mm)** | **FOV (deg.)** | **ImgH (mm)** | **f (mm)** |
|---|---|---|---|---|---|---|---|---|
| Short focal-length state (Z1) | 5.394 | 3.036 | 3.357 | 2.33 | 27.89 | 33.30 | 5.72 | 18.80 |
| Intermediate focal-length state (Z2) | 3.783 | 2.250 | 5.752 | 2.73 | 27.89 | 27.50 | 5.72 | 23.00 |
| Long focal-length state (Z3) | 2.077 | 1.800 | 7.912 | 3.12 | 27.89 | 23.10 | 5.72 | 27.50 |

Table 12 provides higher-order coefficients for the aspheric surfaces of the fourth embodiment. Each aspheric surface profile may be defined by the equation provided in connection with the first embodiment.

**TABLE 12 - ASPHERIC COEFFICIENTS (PART 1 OF 3)**

| **Surface No.** | **K** | **A4** | **A6** | **A8** | **A10** |
|---|---|---|---|---|---|
| 1 | 9.77376E-02 | -9.97666E-06 | -2.78789E-06 | 1.94222E-06 | -3.79188E-07 |
| 2 | -2.06552E-02 | 9.19330E-05 | 1.73194E-05 | -3.90814E-06 | 6.74582E-07 |
| 5 | -6.41426E-02 | 1.66575E-05 | 1.35591E-05 | -3.07085E-06 | 3.37773E-07 |
| 6 | -9.90000E+01 | -4.50137E-05 | 4.69571E-05 | -1.14702E-05 | 1.22923E-06 |
| 7 | 9.90000E+01 | -1.93696E-04 | 1.34080E-04 | -3.89955E-05 | 5.37062E-06 |
| 8 | -1.38561E-16 | -7.05465E-05 | 1.52266E-04 | -5.05971E-05 | 8.27857E-06 |
| 9 | -4.17854E+00 | 6.93445E-04 | 1.97105E-05 | -2.28658E-05 | 4.66583E-06 |
| 10 | -6.46533E+01 | 1.04431E-04 | -3.68334E-05 | 3.21183E-05 | -7.73682E-06 |
| 11 | -8.29455E+01 | 2.58827E-03 | -1.45139E-03 | 6.09411E-04 | -1.37617E-04 |
| 12 | 5.13223E-01 | 6.50103E-01 | -5.77937E+00 | 3.12299E+01 | -1.17336E+02 |
| 13 | 1.47592E+01 | 3.72833E-01 | -2.43621E+00 | -5.45497E+00 | 9.55353E+01 |
| 14 | -2.89154E+01 | 3.87400E-01 | -4.89041E+00 | 2.53299E+01 | -1.04534E+02 |
| 15 | -9.90000E+01 | -2.63954E+00 | -6.91773E+00 | 9.91532E+01 | -5.28101E+02 |
| 16 | -1.73050E+01 | -3.80277E+00 | 1.30515E+01 | -3.30035E+01 | 6.79017E+01 |

**TABLE 12 - ASPHERIC COEFFICIENTS (PART 2 OF 3)**

| **Surface No.** | **A12** | **A14** | **A16** | **A18** | **A20** |
|---|---|---|---|---|---|
| 1 | 4.88490E-08 | -3.91779E-09 | 1.87816E-10 | -4.93064E-12 | 5.36921E-14 |
| 2 | -6.59471E-08 | 3.66884E-09 | -1.06348E-10 | 1.09432E-12 | 4.57971E-15 |
| 5 | -2.26401E-08 | 9.56308E-10 | -1.72400E-11 | 0.00000E+00 | 0.00000E+00 |
| 6 | -6.66074E-08 | 1.87556E-09 | -2.46717E-11 | 0.00000E+00 | 0.00000E+00 |
| 7 | -3.93950E-07 | 1.47390E-08 | -2.28167E-10 | 0.00000E+00 | 0.00000E+00 |
| 8 | -7.13935E-07 | 3.13949E-08 | -5.40493E-10 | 0.00000E+00 | 0.00000E+00 |
| 9 | -5.10545E-07 | 3.13519E-08 | -1.09936E-09 | 2.26003E-11 | -3.13545E-13 |
| 10 | 1.14835E-06 | -1.07962E-07 | 6.18868E-09 | -1.98530E-10 | 2.65974E-12 |
| 11 | 1.91088E-05 | -1.67236E-06 | 9.00185E-08 | -2.72399E-09 | 3.52165E-11 |
| 12 | 3.19622E+02 | -6.20056E+02 | 8.33254E+02 | -7.49635E+02 | 4.28108E+02 |
| 13 | -4.97877E+02 | 1.54587E+03 | -3.14981E+03 | 4.29176E+03 | -3.86333E+03 |
| 14 | 3.19146E+02 | -6.68816E+02 | 9.34065E+02 | -8.53373E+02 | 4.90742E+02 |
| 15 | 1.73358E+03 | -3.76806E+03 | 5.50813E+03 | -5.36339E+03 | 3.33917E+03 |
| 16 | -1.07179E+02 | 1.13772E+02 | -7.32807E+01 | 2.55288E+01 | -3.66864E+00 |

**TABLE 12 - ASPHERIC COEFFICIENTS (PART 3 OF 3)**

| **Surface No.** | **A22** | **A24** | **A26** |
|---|---|---|---|
| 12 | -1.39738E+02 | 1.97889E+01 | 0.00000E+00 |
| 13 | 2.20098E+03 | -7.17732E+02 | 1.02044E+02 |
| 14 | -1.61630E+02 | 2.33291E+01 | 0.00000E+00 |
| 15 | -1.20247E+03 | 1.90338E+02 | 0.00000E+00 |

FIGS. 12(A), 12(B), and 12(C) respectively show longitudinal spherical-aberration curves, astigmatism curves, and a distortion curve of the optical lens 100 according to the fourth embodiment in the short focal-length state Z1. The plots show that longitudinal spherical aberration, astigmatism, and distortion are favorably controlled, such that the optical lens 100 has favorable imaging quality. The wavelengths corresponding to the curves in FIGS. 12(A), 12(B), and 12(C) are the same as those described for FIGS. 2(A), 2(B), and 2(C).

### FIFTH EMBODIMENT

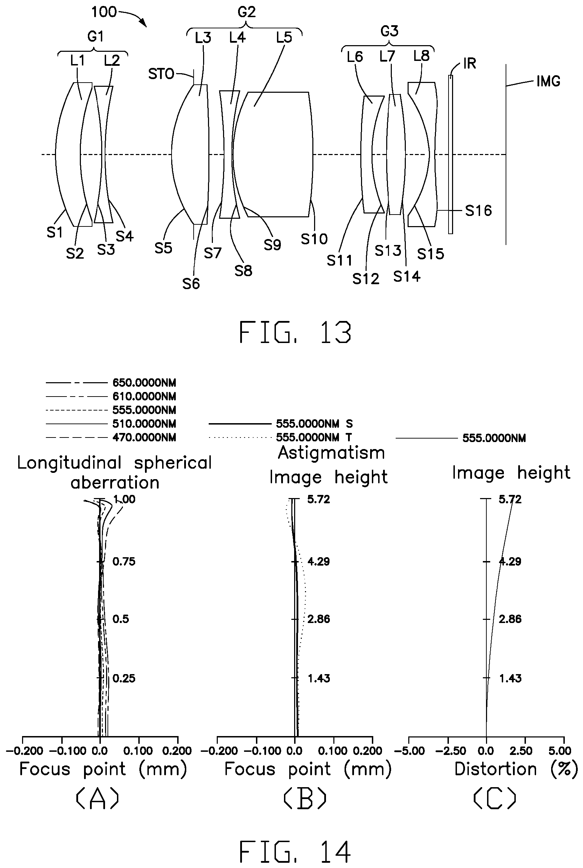

Referring to FIG. 13, the fifth embodiment differs from the first embodiment in that the object-side surface S11 of the sixth lens L6 is convex near the optical axis and the object-side surface S15 of the eighth lens L8 is concave near the optical axis. The remaining features are as described in the first embodiment.

Table 13 shows parameters of the optical lens 100 according to this embodiment. Focal lengths and material refractive indices are evaluated at a reference wavelength of 555 nm, and Abbe numbers are as listed. The Y radii, thicknesses, and focal lengths are expressed in millimeters (mm). The remaining parameters have the same meanings as the corresponding parameters of the first embodiment.

**TABLE 13**

| **Surf ace No.** | **Surface Name** | **Surface Type** | **Y Radius (mm)** | **Thick ness (mm)** | **Materi al** | **Refract ive Index** | **Abbe Numb er** | **Focal Length (mm)** |
|---|---|---|---|---|---|---|---|---|
| OBJ | Object | Spheric al | Infinity | Infinity | | | | |
| 1 | First lens L1 | Aspheri c | 9.541 | 2.033 | Plastic | 1.592 | 28.390 | 31.561 |
| 2 | First lens L1 | Aspheri c | 17.964 | 0.822 | | | | |
| 3 | Second lens L2 | Spheric al | -39.131 | 0.200 | Glass | 1.807 | 46.574 | -14.162 |
| 4 | Second lens L2 | Spheric al | 16.185 | A | | | | |
| STO | Aperture stop | Spheric al | Infinity | -1.499 | | | | |
| 5 | Third lens L3 | Aspheri c | 7.102 | 2.598 | Glass | 1.498 | 81.558 | 12.577 |
| 6 | Third lens L3 | Aspheri c | -46.749 | 0.893 | | | | |
| 7 | Fourth lens L4 | Aspheri c | -69.564 | 0.480 | Plastic | 1.620 | 25.935 | -15.286 |
| 8 | Fourth lens L4 | Aspheri c | 10.992 | 0.050 | | | | |
| 9 | Fifth lens L5 | Aspheri c | 7.448 | 5.861 | Plastic | 1.537 | 55.774 | 11.562 |
| 10 | Fifth lens L5 | Aspheri c | -26.932 | B | | | | |
| 11 | Sixth lens L6 | Aspheri c | 48.491 | 0.846 | Plastic | 1.546 | 55.932 | -23.334 |
| 12 | Sixth lens L6 | Aspheri c | 10.028 | 0.484 | | | | |
| 13 | Seventh lens L7 | Aspheri c | 15.280 | 1.292 | Plastic | 1.620 | 25.935 | 14.945 |
| 14 | Seventh lens L7 | Aspheri c | -22.736 | 0.956 | | | | |
| 15 | Eighth lens L8 | Aspheri c | -193.078 | 0.405 | Plastic | 1.546 | 55.932 | -10.149 |
| 16 | Eighth lens L8 | Aspheri c | 5.710 | 1.000 | | | | |
| 17 | Optical filter IR | Spheric al | Infinity | 0.210 | Glass | 1.518 | 64.166 | |
| 18 | Optical filter IR | Spheric al | Infinity | C | | | | |
| IMG | Imaging plane | Spheric al | Infinity | 0.000 | | | | |

Table 14 supplements Table 13 and provides values of variable parameters when the optical lens 100 is in the short focal-length state Z1, the intermediate focal-length state Z2, and the long focal-length state Z3.

**TABLE 14**

| **State** | **A (mm)** | **B (mm)** | **C (mm)** | **FNO** | **TTL (mm)** | **FOV (deg.)** | **ImgH (mm)** | **f (mm)** |
|---|---|---|---|---|---|---|---|---|
| Short focal-length state (Z1) | 5.389 | 3.226 | 3.349 | 2.33 | 27.89 | 33.30 | 5.72 | 18.80 |
| Intermediate focal-length state (Z2) | 3.783 | 2.250 | 5.928 | 2.73 | 27.89 | 27.50 | 5.72 | 23.00 |
| Long focal-length state (Z3) | 2.077 | 1.800 | 8.088 | 3.12 | 27.89 | 23.10 | 5.72 | 27.50 |

Table 15 provides higher-order coefficients for the aspheric surfaces of the fifth embodiment. Each aspheric surface profile may be defined by the equation provided in connection with the first embodiment.

**TABLE 15 - ASPHERIC COEFFICIENTS (PART 1 OF 3)**

| **Surface No.** | **K** | **A4** | **A6** | **A8** | **A10** |
|---|---|---|---|---|---|
| 1 | 2.58217E-01 | 6.32629E-05 | -3.13749E-06 | 1.94067E-06 | -3.78864E-07 |
| 2 | -2.57946E-15 | 1.01173E-04 | 1.79762E-05 | -3.91692E-06 | 6.75574E-07 |
| 5 | -1.85400E-02 | 3.60776E-05 | 1.40206E-05 | -3.04679E-06 | 3.37297E-07 |
| 6 | 3.03766E+01 | -3.87124E-05 | 4.81833E-05 | -1.14521E-05 | 1.22854E-06 |
| 7 | 2.89919E+01 | -2.09076E-04 | 1.34166E-04 | -3.88947E-05 | 5.37909E-06 |
| 8 | -3.83758E-03 | -6.57973E-05 | 1.50628E-04 | -5.07703E-05 | 8.26769E-06 |
| 9 | -4.25796E+00 | 6.90071E-04 | 2.10375E-05 | -2.27527E-05 | 4.67078E-06 |
| 10 | -8.54152E+01 | -1.13847E-05 | -5.48319E-05 | 3.15047E-05 | -7.73063E-06 |
| 11 | -9.90000E+01 | 2.42046E-03 | -1.46115E-03 | 6.08976E-04 | -1.37629E-04 |
| 12 | -2.37714E+00 | 6.29627E-03 | -5.37315E-03 | 2.10912E-03 | -5.24613E-04 |
| 13 | 1.44775E+01 | 6.05166E-03 | -5.06932E-03 | 1.78501E-03 | -4.79020E-04 |
| 14 | -9.90000E+01 | 4.16168E-03 | -3.56118E-03 | 1.35303E-03 | -4.16243E-04 |
| 15 | -9.90000E+01 | -2.12568E-02 | 2.11045E-03 | 1.97209E-04 | -1.51036E-04 |
| 16 | -1.58945E+01 | -1.43720E-02 | 2.61277E-03 | -2.62279E-04 | 1.01133E-05 |

**TABLE 15 - ASPHERIC COEFFICIENTS (PART 2 OF 3)**

| **Surface No.** | **A12** | **A14** | **A16** | **A18** | **A20** |
|---|---|---|---|---|---|
| 1 | 4.88741E-08 | -3.91552E-09 | 1.87980E-10 | -4.92221E-12 | 5.39903E-14 |
| 2 | -6.58283E-08 | 3.67575E-09 | -1.06088E-10 | 1.10276E-12 | 5.03176E-15 |
| 5 | -2.27600E-08 | 9.46962E-10 | -1.78248E-11 | 0.00000E+00 | 0.00000E+00 |
| 6 | -6.66239E-08 | 1.87608E-09 | -2.45965E-11 | 0.00000E+00 | 0.00000E+00 |
| 7 | -3.93447E-07 | 1.47643E-08 | -2.26866E-10 | 0.00000E+00 | 0.00000E+00 |
| 8 | -7.14493E-07 | 3.13648E-08 | -5.42839E-10 | 0.00000E+00 | 0.00000E+00 |
| 9 | -5.10368E-07 | 3.13651E-08 | -1.09737E-09 | 2.29311E-11 | -2.66637E-13 |
| 10 | 1.15024E-06 | -1.07841E-07 | 6.19444E-09 | -1.98220E-10 | 2.70157E-12 |
| 11 | 1.91082E-05 | -1.67239E-06 | 9.00150E-08 | -2.72258E-09 | 3.53705E-11 |
| 12 | 9.86124E-05 | -1.48707E-05 | 1.73133E-06 | -1.43727E-07 | 7.79806E-09 |
| 13 | 1.11038E-04 | -2.08403E-05 | 2.85884E-06 | -2.71137E-07 | 1.71816E-08 |
| 14 | 1.03526E-04 | -1.89883E-05 | 2.40539E-06 | -2.02528E-07 | 1.08188E-08 |
| 15 | 4.19399E-05 | -7.69120E-06 | 9.53915E-07 | -7.75935E-08 | 3.93380E-09 |
| 16 | 8.43392E-07 | -1.35691E-07 | 7.77368E-09 | -2.14450E-10 | 2.36180E-12 |

**TABLE 15 - ASPHERIC COEFFICIENTS (PART 3 OF 3)**

| **Surface No.** | **A22** | **A24** | **A26** |
|---|---|---|---|
| 12 | -2.44824E-10 | 3.35218E-12 | 0.00000E+00 |
| 13 | -6.93415E-10 | 1.61158E-11 | -1.64299E-13 |
| 14 | -3.32664E-10 | 4.49920E-12 | 0.00000E+00 |
| 15 | -1.12434E-10 | 1.38346E-12 | 0.00000E+00 |

FIGS. 14(A), 14(B), and 14(C) respectively show longitudinal spherical-aberration curves, astigmatism curves, and a distortion curve of the optical lens 100 according to the fifth embodiment in the short focal-length state Z1. The plots show that longitudinal spherical aberration, astigmatism, and distortion are favorably controlled, such that the optical lens 100 has favorable imaging quality. The wavelengths corresponding to the curves in FIGS. 14(A), 14(B), and 14(C) are the same as those described for FIGS. 2(A), 2(B), and 2(C).

### SIXTH EMBODIMENT

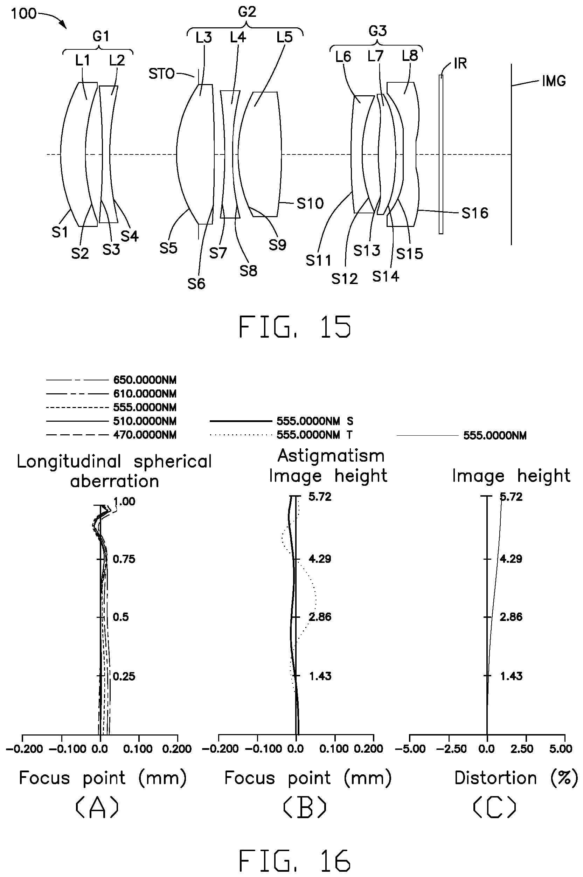

Referring to FIG. 15, the sixth embodiment differs from the first embodiment in that the object-side surface S11 of the sixth lens L6 is convex near the optical axis. The remaining features of the sixth embodiment are the same as the corresponding features of the first embodiment and are not repeated.

Table 16 shows parameters of the optical lens 100 according to this embodiment. Focal lengths and material refractive indices are evaluated at a reference wavelength of 555 nm, and Abbe numbers are as listed. The Y radii, thicknesses, and focal lengths are expressed in millimeters (mm). The remaining parameters have the same meanings as the corresponding parameters of the first embodiment.

**TABLE 16**

| **Surface No.** | **Surface Name** | **Surface Type** | **Y Radius (mm)** | **Thickness (mm)** | **Material** | **Refractive Index** | **Abbe Number** | **Focal Length (mm)** |
|---|---|---|---|---|---|---|---|---|
| OBJ | Object | Spherical | Infinity | Infinity | | | | |
| 1 | First lens L1 | Aspheric | 10.932 | 1.460 | Plastic | 1.592 | 28.390 | 36.886 |
| 2 | First lens L1 | Aspheric | 20.813 | 0.853 | | | | |
| 3 | Second lens L2 | Spherical | -50.483 | 0.640 | Glass | 1.807 | 46.574 | -16.986 |
| 4 | Second lens L2 | Spherical | 18.929 | A | | | | |
| STO | Aperture stop | Spherical | Infinity | -1.437 | | | | |
| 5 | Third lens L3 | Aspheric | 7.007 | 2.797 | Glass | 1.498 | 81.558 | 12.860 |
| 6 | Third lens L3 | Aspheric | -64.c36 | 1.237 | | | | |
| 7 | Fourth lens L4 | Aspheric | -30.017 | 0.653 | Plastic | 1.620 | 25.935 | -15.060 |
| 8 | Fourth lens L4 | Aspheric | 13.651 | 0.469 | | | | |
| 9 | Fifth lens L5 | Aspheric | 7.851 | 3.000 | Plastic | 1.537 | 55.774 | 10.105 |
| 10 | Fifth lens L5 | Aspheric | -15.183 | B | | | | |
| 11 | Sixth lens L6 | Aspheric | 183.913 | 0.992 | Plastic | 1.546 | 55.932 | -16.520 |
| 12 | Sixth lens L6 | Aspheric | 8.583 | 1.067 | | | | |
| 13 | Seventh lens L7 | Aspheric | 20.232 | 1.380 | Plastic | 1.620 | 25.935 | 18.355 |
| 14 | Seventh lens L7 | Aspheric | -25.289 | 0.480 | | | | |
| 15 | Eighth lens L8 | Aspheric | 23.380 | 0.750 | Plastic | 1.546 | 55.932 | -12.804 |
| 16 | Eighth lens L8 | Aspheric | 5.321 | 1.000 | | | | |
| 17 | Optical filter IR | Spherical | Infinity | 0.210 | Glass | 1.518 | 64.166 | |
| 18 | Optical filter IR | Spherical | Infinity | C | | | | |
| IMG | Imaging plane | Spherical | Infinity | 0.000 | | | | |

Table 17 supplements Table 16 and provides values of variable parameters when the optical lens 100 is in the short focal-length state Z1, the intermediate focal-length state Z2, and the long focal-length state Z3.

**TABLE 17**

| **State** | **A (mm)** | **B (mm)** | **C (mm)** | **FNO** | **TTL (mm)** | **FOV (deg.)** | **ImgH (mm)** | **f (mm)** |
|---|---|---|---|---|---|---|---|---|
| Short focal-length state (Z1) | 5.518 | 3.060 | 3.566 | 2.20 | 27.70 | 35.00 | 5.72 | 18.00 |
| Intermediate focal-length state (Z2) | 3.783 | 2.250 | 6.116 | 2.56 | 27.70 | 28.97 | 5.72 | 21.90 |
| Long focal-length state (Z3) | 2.077 | 1.800 | 8.272 | 2.88 | 27.70 | 24.67 | 5.72 | 25.80 |

Table 18 provides higher-order coefficients for the aspheric surfaces of the sixth embodiment. Each aspheric surface profile may be defined by the equation provided in connection with the first embodiment.

**TABLE 18 - ASPHERIC COEFFICIENTS (PART 1 OF 3)**

| **Surface No.** | **K** | **A4** | **A6** | **A8** | **A10** |
|---|---|---|---|---|---|
| 1 | 3.42591E-01 | 7.50790E-05 | -3.05646E-06 | 1.91626E-06 | -3.79061E-07 |
| 2 | 5.69639E-01 | 9.27745E-05 | 1.65680E-05 | -3.95005E-06 | 6.75127E-07 |
| 5 | -1.84874E-01 | -7.53378E-05 | 1.24960E-05 | -3.15646E-06 | 3.32033E-07 |
| 6 | 6.36952E+01 | -4.44787E-05 | 4.50628E-05 | -1.15571E-05 | 1.22680E-06 |
| 7 | -1.35355E+00 | -1.76756E-04 | 1.37255E-04 | -3.88503E-05 | 5.37536E-06 |
| 8 | -4.12367E-01 | -1.12421E-04 | 1.45993E-04 | -5.09100E-05 | 8.26690E-06 |
| 9 | -4.23297E+00 | 7.21666E-04 | 2.50574E-05 | -2.25473E-05 | 4.68021E-06 |
| 10 | -2.52371E+01 | -1.11887E-04 | -4.52067E-05 | 3.19734E-05 | -7.73812E-06 |
| 11 | -9.90000E+01 | 2.32099E-03 | -1.46984E-03 | 6.09207E-04 | -1.37598E-04 |
| 12 | -9.40424E-01 | 2.96572E-03 | -3.12205E-03 | 1.36214E-03 | -3.58238E-04 |
| 13 | 9.66127E+00 | 3.02352E-03 | -2.84285E-03 | 7.31165E-04 | -1.29593E-04 |
| 14 | 3.16070E+01 | 6.43043E-03 | -5.39999E-03 | 1.69824E-03 | -3.77543E-04 |
| 15 | 9.61178E+00 | -1.03023E-02 | -3.23817E-03 | 1.41946E-03 | -3.09783E-04 |
| 16 | -1.22894E+01 | -6.54204E-03 | -3.76016E-04 | 3.59474E-04 | -7.29094E-05 |

**TABLE 18 - ASPHERIC COEFFICIENTS (PART 2 OF 3)**

| **Surface No.** | **A12** | **A14** | **A16** | **A18** | **A20** |
|---|---|---|---|---|---|
| 1 | 4.89188E-08 | -3.91294E-09 | 1.88062E-10 | -4.92458E-12 | 5.37220E-14 |
| 2 | -6.57881E-08 | 3.67864E-09 | -1.05871E-10 | 1.10276E-12 | 4.25344E-15 |
| 5 | -2.29013E-08 | 9.48430E-10 | -1.73907E-11 | 0.00000E+00 | 0.00000E+00 |
| 6 | -6.65967E-08 | 1.88056E-09 | -2.43376E-11 | 0.00000E+00 | 0.00000E+00 |
| 7 | -3.93733E-07 | 1.47634E-08 | -2.25276E-10 | 0.00000E+00 | 0.00000E+00 |
| 8 | -7.14310E-07 | 3.13693E-08 | -5.43909E-10 | 0.00000E+00 | 0.00000E+00 |
| 9 | -5.10016E-07 | 3.13774E-08 | -1.09681E-09 | 2.29652E-11 | -2.66095E-13 |
| 10 | 1.14936E-06 | -1.07813E-07 | 6.20165E-09 | -1.97775E-10 | 2.69060E-12 |
| 11 | 1.91091E-05 | -1.67237E-06 | 9.00129E-08 | -2.72248E-09 | 3.53269E-11 |
| 12 | 6.61894E-05 | -8.84733E-06 | 8.35043E-07 | -5.24814E-08 | 1.98958E-09 |
| 13 | 2.60976E-05 | -6.38967E-06 | 1.29343E-06 | -1.82654E-07 | 1.71442E-08 |
| 14 | 6.85300E-05 | -9.77845E-06 | 1.00156E-06 | -6.87630E-08 | 2.96533E-09 |
| 15 | 5.33567E-05 | -7.77793E-06 | 8.65974E-07 | -6.63924E-08 | 3.23756E-09 |
| 16 | 8.12475E-06 | -5.54981E-07 | 2.31744E-08 | -5.44529E-10 | 5.52380E-12 |

**TABLE 18 - ASPHERIC COEFFICIENTS (PART 3 OF 3)**

| **Surface No.** | **A22** | **A24** | **A26** |
|---|---|---|---|
| 12 | -3.71661E-11 | 1.69909E-13 | 0.00000E+00 |
| 13 | -1.01856E-09 | 3.46113E-11 | -5.11884E-13 |
| 14 | -7.19642E-11 | 7.42637E-13 | 0.00000E+00 |
| 15 | -8.99201E-11 | 1.08084E-12 | 0.00000E+00 |

FIGS. 16(A), 16(B), and 16(C) respectively show longitudinal spherical-aberration curves, astigmatism curves, and a distortion curve of the optical lens 100 according to the sixth embodiment in the short focal-length state Z1. The plots show that longitudinal spherical aberration, astigmatism, and distortion are favorably controlled, such that the optical lens 100 has favorable imaging quality. The wavelengths corresponding to the curves in FIGS. 16(A), 16(B), and 16(C) are the same as those described for FIGS. 2(A), 2(B), and 2(C).

### SEVENTH EMBODIMENT

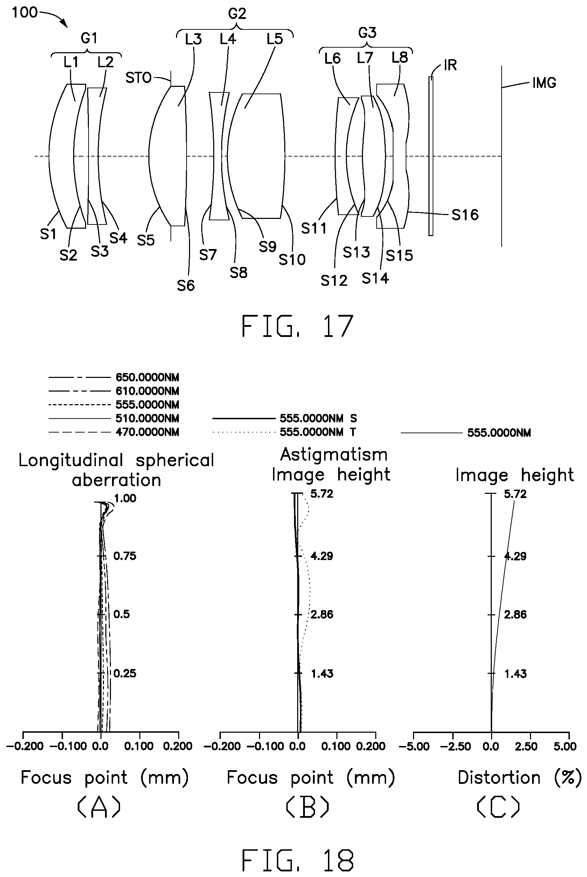

Referring to FIG. 17, the seventh embodiment differs from the first embodiment in that the image-side surface S6 of the third lens L3 is concave near the optical axis and the object-side surface S7 of the fourth lens L4 is convex near the optical axis. The remaining features of the seventh embodiment are the same as the corresponding features of the first embodiment and are not repeated.

Table 19 shows parameters of the optical lens 100 according to this embodiment. Focal lengths and material refractive indices are evaluated at a reference wavelength of 555 nm, and Abbe numbers are as listed. The Y radii, thicknesses, and focal lengths are expressed in millimeters (mm). The remaining parameters have the same meanings as the corresponding parameters of the first embodiment.

**TABLE 19**

| **Surface No.** | **Surface Name** | **Surface Type** | **Y Radius (mm)** | **Thicknes s (mm)** | **Material** | **Refractiv e Index** | **Abbe Number** | **Focal Length (mm)** |
|---|---|---|---|---|---|---|---|---|
| OBJ | Object | Spherical | Infinity | Infinity | | | | |
| 1 | First lens L1 | Aspheric | 11.544 | 1.341 | Plastic | 1.592 | 28.390 | 47.122 |
| 2 | First lens L1 | Aspheric | 18.850 | 0.790 | | | | |
| 3 | Second lens L2 | Spherical | -133.873 | 0.640 | Glass | 1.807 | 46.574 | -19.900 |
| 4 | Second lens L2 | Spherical | 18.291 | A | | | | |
| STO | Aperture stop | Spherical | Infinity | -1.448 | | | | |
| 5 | Third lens L3 | Aspheric | 6.859 | 2.509 | Glass | 1.498 | 81.558 | 13.823 |
| 6 | Third lens L3 | Aspheric | 1472.758 | 1.619 | | | | |
| 7 | Fourth lens L4 | Aspheric | 249.266 | 1.290 | Plastic | 1.620 | 25.935 | -17.174 |
| 8 | Fourth lens L4 | Aspheric | 10.184 | 0.211 | | | | |
| 9 | Fifth lens L5 | Aspheric | 7.919 | 4.124 | Plastic | 1.537 | 55.774 | 10.837 |
| 10 | Fifth lens L5 | Aspheric | -17.904 | B | | | | |
| 11 | Sixth lens L6 | Aspheric | -57.463 | 0.640 | Plastic | 1.546 | 55.932 | -15.040 |
| 12 | Sixth lens L6 | Aspheric | 9.620 | 0.971 | | | | |
| 13 | Seventh lens L7 | Aspheric | 24.906 | 1.720 | Plastic | 1.620 | 25.935 | 19.616 |
| 14 | Seventh lens L7 | Aspheric | -23.107 | 0.505 | | | | |
| 15 | Eighth lens L8 | Aspheric | 21.550 | 0.750 | Plastic | 1.546 | 55.932 | -14.868 |
| 16 | Eighth lens L8 | Aspheric | 5.825 | 1.000 | | | | |
| 17 | Optical filter IR | Spherical | Infinity | 0.210 | Glass | 1.518 | 64.166 | |
| 18 | Optical filter IR | Spherical | Infinity | C | | | | |
| IMG | Imaging plane | Spherical | Infinity | 0.000 | | | | |

Table 20 supplements Table 19 and provides values of variable parameters when the optical lens 100 is in the short focal-length state Z1, the intermediate focal-length state Z2, and the long focal-length state Z3.

**TABLE 20**

| **State** | **A (mm)** | **B (mm)** | **C (mm)** | **FNO** | **TTL (mm)** | **FOV (deg.)** | **ImgH (mm)** | **f (mm)** |
|---|---|---|---|---|---|---|---|---|
| Short focal-length state (Z1) | 5.379 | 2.972 | 3.474 | 2.39 | 28.70 | 32.44 | 5.72 | 19.40 |
| Intermediate focal-length state (Z2) | 3.783 | 2.250 | 5.796 | 2.76 | 28.70 | 27.54 | 5.72 | 23.10 |
| Long focal-length state (Z3) | 2.077 | 1.800 | 7.947 | 3.10 | 28.70 | 23.59 | 5.72 | 27.10 |

Table 21 provides higher-order coefficients for the aspheric surfaces of the seventh embodiment. Each aspheric surface profile may be defined by the equation provided in connection with the first embodiment.

**TABLE 21 - ASPHERIC COEFFICIENTS (PART 1 OF 3)**

| **Surface No.** | **K** | **A4** | **A6** | **A8** | **A10** |
|---|---|---|---|---|---|
| 1 | 1.85670E-01 | 4.91220E-05 | -3.79003E-06 | 1.87268E-06 | -3.82218E-07 |
| 2 | -4.30335E-01 | 5.93293E-05 | 1.55090E-05 | -4.06066E-06 | 6.72483E-07 |
| 5 | -1.68504E-01 | -6.38449E-05 | 1.17938E-05 | -3.06320E-06 | 3.36551E-07 |
| 6 | 9.90000E+01 | -2.71756E-05 | 4.62408E-05 | -1.16154E-05 | 1.22156E-06 |
| 7 | -9.90000E+01 | -2.33206E-04 | 1.33837E-04 | -3.89763E-05 | 5.37247E-06 |
| 8 | -2.87866E-01 | -1.25662E-04 | 1.46492E-04 | -5.08359E-05 | 8.26182E-06 |
| 9 | -4.47368E+00 | 7.14742E-04 | 2.29486E-05 | -2.28460E-05 | 4.66948E-06 |
| 10 | -3.43266E+01 | -1.41166E-04 | -5.17501E-05 | 3.17749E-05 | -7.73717E-06 |
| 11 | 9.90000E+01 | 2.61187E-03 | -1.46084E-03 | 6.09105E-04 | -1.37604E-04 |
| 12 | -1.13383E+00 | 3.12161E-03 | -2.94027E-03 | 1.21523E-03 | -3.13849E-04 |
| 13 | 1.11991E+01 | 2.56689E-03 | -2.14495E-03 | 4.66423E-04 | -3.79672E-05 |
| 14 | 2.87603E+01 | 5.00071E-03 | -3.65149E-03 | 9.99806E-04 | -1.91502E-04 |
| 15 | 2.73500E+00 | -1.01213E-02 | -2.27493E-03 | 8.81549E-04 | -1.65455E-04 |
| 16 | -1.43696E+01 | -6.06715E-03 | -5.55981E-04 | 3.25346E-04 | -5.45616E-05 |

**TABLE 21 - ASPHERIC COEFFICIENTS (PART 2 OF 3)**

| **Surface No.** | **A12** | **A14** | **A16** | **A18** | **A20** |
|---|---|---|---|---|---|
| 1 | 4.87938E-08 | -3.91265E-09 | 1.88327E-10 | -4.91237E-12 | 5.29971E-14 |
| 2 | -6.57493E-08 | 3.68194E-09 | -1.06026E-10 | 1.09204E-12 | 4.52609E-15 |
| 5 | -2.29149E-08 | 9.39188E-10 | -1.77624E-11 | 0.00000E+00 | 0.00000E+00 |
| 6 | -6.67517E-08 | 1.88015E-09 | -2.41874E-11 | 0.00000E+00 | 0.00000E+00 |
| 7 | -3.93965E-07 | 1.47448E-08 | -2.25427E-10 | 0.00000E+00 | 0.00000E+00 |
| 8 | -7.14922E-07 | 3.13267E-08 | -5.47838E-10 | 0.00000E+00 | 0.00000E+00 |
| 9 | -5.10400E-07 | 3.13520E-08 | -1.09859E-09 | 2.28747E-11 | -2.68673E-13 |
| 10 | 1.14952E-06 | -1.07827E-07 | 6.19925E-09 | -1.97965E-10 | 2.67947E-12 |
| 11 | 1.91101E-05 | -1.67224E-06 | 9.00206E-08 | -2.72232E-09 | 3.52899E-11 |
| 12 | 5.92540E-05 | -8.50457E-06 | 9.03746E-07 | -6.70471E-08 | 3.21459E-09 |
| 13 | -8.51569E-06 | 3.69461E-06 | -6.84183E-07 | 7.38216E-08 | -4.61338E-09 |
| 14 | 2.93194E-05 | -3.32132E-06 | 2.30182E-07 | -6.34223E-09 | -2.27068E-10 |
| 15 | 2.60829E-05 | -3.53202E-06 | 3.36192E-07 | -1.92869E-08 | 5.65999E-10 |
| 16 | 5.05769E-06 | -2.83656E-07 | 9.55315E-09 | -1.77437E-10 | 1.39031E-12 |

**TABLE 21 - ASPHERIC COEFFICIENTS (PART 3 OF 3)**

| **Surface No.** | **A22** | **A24** | **A26** |
|---|---|---|---|
| 12 | -8.81356E-11 | 1.03452E-12 | 0.00000E+00 |
| 13 | 1.44920E-10 | -1.05120E-12 | -3.31059E-14 |
| 14 | 2.03875E-11 | -4.03285E-13 | 0.00000E+00 |
| 15 | -4.71906E-12 | -7.54088E-14 | 0.00000E+00 |

FIGS. 18(A), 18(B), and 18(C) respectively show longitudinal spherical-aberration curves, astigmatism curves, and a distortion curve of the optical lens 100 according to the seventh embodiment in the short focal-length state Z1. The plots show that longitudinal spherical aberration, astigmatism, and distortion are favorably controlled, such that the optical lens 100 has favorable imaging quality. The wavelengths corresponding to the curves in FIGS. 18(A), 18(B), and 18(C) are the same as those described for FIGS. 2(A), 2(B), and 2(C).

### SUMMARY OF RELATIONSHIP VALUES

Table 22 summarizes values of the relationships for the first through seventh embodiments.

**TABLE 22**

| **Parameter or Relationship** | **Emb. 1** | **Emb. 2** | **Emb. 3** | **Emb. 4** | **Emb. 5** | **Emb. 6** | **Emb. 7** |
|---|---|---|---|---|---|---|---|
| FOVz1 | 34.100 | 33.300 | 33.300 | 33.300 | 33.300 | 35.000 | 32.444 |
| FOVz2 | 28.400 | 27.500 | 27.500 | 27.500 | 27.500 | 28.970 | 27.544 |
| FOVz3 | 24.200 | 23.100 | 23.100 | 23.100 | 23.100 | 24.670 | 23.594 |
| FNOz1 | 2.290 | 2.330 | 2.330 | 2.330 | 2.330 | 2.196 | 2.390 |
| FNOz2 | 2.660 | 2.730 | 2.730 | 2.730 | 2.730 | 2.562 | 2.763 |
| FNOz3 | 3.000 | 3.120 | 3.120 | 3.120 | 3.120 | 2.880 | 3.096 |
| f1/fz1 | 2.505 | 1.882 | 2.478 | 1.598 | 1.679 | 2.049 | 2.429 |
| f2/fz1 | -1.039 | -0.846 | -0.991 | -0.810 | -0.753 | -0.944 | -1.026 |
| fz1/f3 | 1.320 | 1.449 | 1.454 | 1.610 | 1.495 | 1.400 | 1.403 |
| fz1/f4 | -1.022 | -1.173 | -1.184 | -1.325 | -1.230 | -1.195 | -1.130 |
| fz1/f5 | 1.694 | 1.691 | 1.679 | 1.749 | 1.626 | 1.781 | 1.790 |
| f6/fz1 | -0.871 | -1.239 | -1.256 | -1.232 | -1.241 | -0.918 | -0.775 |
| f7/fz1 | 1.089 | 0.915 | 0.868 | 1.146 | 0.795 | 1.020 | 1.011 |
| fz1/f8 | -1.310 | -1.975 | -2.133 | -1.826 | -1.852 | -1.406 | -1.305 |
| fz1/R11 | 1.988 | 2.161 | 2.650 | 2.430 | 1.970 | 1.647 | 1.680 |
| fz1/R12 | 1.386 | 1.354 | 2.083 | 1.459 | 1.047 | 0.865 | 1.029 |
| \|R21\|/fz1 | 11.180 | 5.445 | 1.278 | 14.019 | 2.081 | 2.805 | 6.901 |
| fz1/R22 | 1.101 | 1.275 | 2.061 | 1.457 | 1.162 | 0.951 | 1.061 |
| fz1/R31 | 2.549 | 2.683 | 2.764 | 3.232 | 2.647 | 2.569 | 2.829 |
| \|R32\|/fz1 | 8.945 | 3.911 | 5.707 | 1801.729 | 2.487 | 3.602 | 75.915 |
| \|R41\|/fz1 | 2.901 | 2.683 | 1.514 | 132.074 | 3.700 | 1.668 | 12.849 |
| fz1/R42 | 1.299 | 1.515 | 1.232 | 2.147 | 1.710 | 1.319 | 1.905 |
| fz1/R51 | 2.301 | 2.455 | 2.117 | 2.769 | 2.524 | 2.293 | 2.450 |
| R52/fz1 | -0.914 | -1.133 | -0.788 | -1.841 | -1.433 | -0.844 | -0.923 |
| \|R61\|/fz1 | 4.874 | 2.838 | 2.636 | 2.639 | 2.579 | 10.217 | 2.962 |
| fz1/R62 | 1.892 | 1.841 | 1.848 | 1.872 | 1.875 | 2.097 | 2.017 |
| R71/fz1 | 1.331 | 0.857 | 0.835 | 0.826 | 0.813 | 1.124 | 1.284 |
| R72/fz1 | -1.342 | -1.630 | -1.469 | -4.916 | -1.209 | -1.405 | -1.191 |
| \|R81\|/fz1 | 1.214 | 16.009 | 4.032 | 5.999 | 10.270 | 1.299 | 1.111 |
| fz1/R82 | 3.262 | 3.682 | 4.166 | 3.517 | 3.292 | 3.383 | 3.331 |
| fG1/fz1 | -2.054 | -1.907 | -1.932 | -2.038 | -1.698 | -2.052 | -2.007 |
| fz1/fG2 | 1.797 | 1.820 | 1.770 | 1.904 | 1.762 | 1.775 | 1.807 |
| fz1/fG3 | -1.592 | -1.656 | -1.728 | -1.781 | -1.336 | -1.554 | -1.662 |
| fG3/fG2 | -1.128 | -1.099 | -1.025 | -1.069 | -1.320 | -1.142 | -1.088 |
| TTL/ImgH | 4.920 | 4.876 | 4.876 | 4.876 | 4.876 | 4.843 | 5.017 |
| TTL/(CT3+CT4+CT 5) | 3.512 | 3.696 | 3.205 | 5.373 | 3.120 | 4.294 | 3.623 |
| TTL/(Az1-Az3) | 8.163 | 8.420 | 8.457 | 8.408 | 8.420 | 8.049 | 8.693 |
| TTL/(Bz1-Bz3) | 22.404 | 21.768 | 22.013 | 22.567 | 19.559 | 21.985 | 24.497 |
| Az1/Az3 | 5.596 | 5.923 | 6.127 | 28.192 | 6.732 | 6.376 | 6.251 |
| (Az1-Az3)/(Bz1-Bz3) | 2.744 | 2.585 | 2.603 | 2.684 | 2.323 | 2.732 | 2.818 |
| Bz1/Bz3 | 1.698 | 1.712 | 1.704 | 1.687 | 1.792 | 1.700 | 1.651 |
| SD11/SD82 | 1.001 | 1.071 | 1.077 | 1.101 | 1.042 | 1.040 | 1.078 |
| SDmax/SDmin | 1.249 | 1.285 | 1.252 | 1.375 | 1.225 | 1.255 | 1.343 |
| (SAG11+SAG12)/CT 6 | 1.612 | 1.279 | 1.624 | 1.871 | 1.337 | 1.175 | 1.483 |
| TDz1/TDz3 | 1.251 | 1.246 | 1.243 | 1.305 | 1.246 | 1.258 | 1.229 |
| CT3/AT34 | 2.319 | 2.873 | 3.977 | 3.009 | 2.910 | 2.262 | 1.550 |
| CT5/CT3 | 2.116 | 1.897 | 2.112 | 0.648 | 2.256 | 1.072 | 1.644 |
| FNOz3/FNOz1 | 1.310 | 1.339 | 1.339 | 1.339 | 1.339 | 1.311 | 1.295 |
| FOVz1/FOVz3 | 1.409 | 1.442 | 1.442 | 1.442 | 1.442 | 1.419 | 1.375 |
| fz3/fz1 | 1.429 | 1.463 | 1.464 | 1.463 | 1.463 | 1.433 | 1.397 |
| GL2/GL1 | 3.170 | 2.421 | 3.647 | 2.460 | 3.235 | 2.762 | 3.519 |
| GL2/GL3 | 2.127 | 1.992 | 2.197 | 1.441 | 2.481 | 1.747 | 2.127 |
| GL3/GL1 | 1.490 | 1.215 | 1.660 | 1.707 | 1.304 | 1.581 | 1.655 |

### CAMERA MODULE

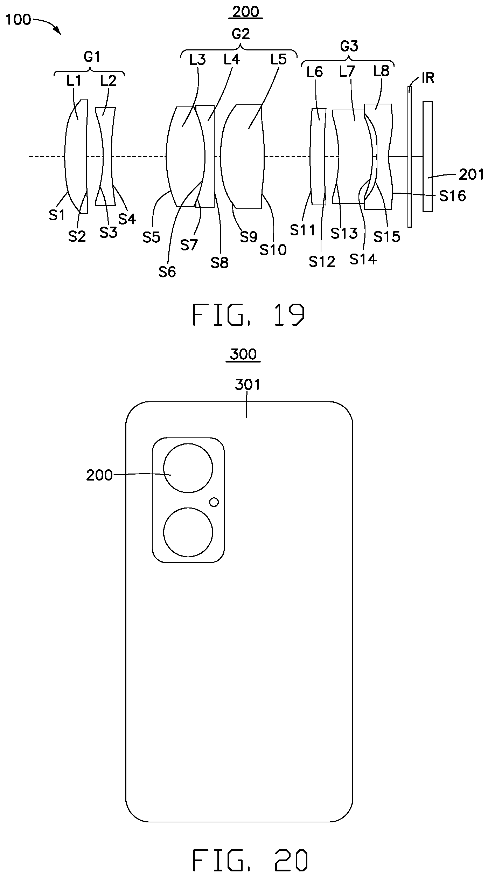

As shown in FIG. 19, a camera module 200 according to an embodiment includes the optical lens 100 according to any of the foregoing embodiments and an image sensor 201. The image sensor 201 is disposed at the image side of the optical lens 100. The image sensor 201 may be a complementary metal-oxide-semiconductor (CMOS) image sensor or a charge-coupled device (CCD) image sensor.

As shown in FIG. 20, an electronic device 300 according to an embodiment includes a housing 301 and the camera module 200 mounted to the housing 301. The electronic device 300 may be, without limitation, a dashboard camera, a smartphone, a tablet computer, a notebook computer, an electronic-book reader, a portable multimedia player (PMP), a portable telephone, a videophone, a mobile medical device, a wearable device, or another electronic device supporting imaging.

The foregoing embodiments illustrate, rather than limit, the present disclosure. Although the present disclosure has been described in detail with reference to exemplary embodiments, a person of ordinary skill in the art will understand that modifications and equivalent substitutions may be made without departing from the spirit and scope of the present disclosure.

## Claims

1. An optical lens (100), **characterized by**, comprising a total of eight lenses with refractive power, the eight lenses sequentially comprising, from an object side to an image side along an optical axis of the optical lens (100):
a first lens (L1), a second lens (L2), a third lens (L3), a fourth lens (L4), a fifth lens (L5), a sixth lens (L6), a seventh lens (L7), and an eighth lens (L8),
wherein the first lens (L1) has positive refractive power, an object-side surface (S1) of the first lens (L1) is convex near the optical axis, and an image-side surface (S2) of the first lens (L1) is concave near the optical axis; the second lens (L2) has negative refractive power, and an image-side surface (S4) of the second lens (L2) is concave near the optical axis; the third lens (L3) has positive refractive power, and an object-side surface (S5) of the third lens (L3) is convex near the optical axis; the fourth lens (L4) has negative refractive power, and an image-side surface (S8) of the fourth lens (L4) is concave near the optical axis; the fifth lens (L5) has positive refractive power, and an object-side surface (S9) and an image-side surface (S10) of the fifth lens (L5) are convex near the optical axis; the sixth lens (L6) has negative refractive power, and an image-side surface (S12) of the sixth lens (L6) is concave near the optical axis; the seventh lens (L7) has positive refractive power, and an object-side surface (S13) and an image-side surface (S14) of the seventh lens (L7) are convex near the optical axis; the eighth lens (L8) has negative refractive power, and an image-side surface (S16) of the eighth lens (L8) is concave near the optical axis; the first lens (L1) and the second lens (L2) form a first lens group (G1), the third lens (L3), the fourth lens (L4), and the fifth lens (L5) form a second lens group (G2), and the sixth lens (L6), the seventh lens (L7), and the eighth lens (L8) form a third lens group (G3);
wherein the first lens group (G1) is fixed relative to an imaging plane (IMG) of the optical lens (100), and the second lens group (G2) and the third lens group (G3) are movable along the optical axis between the first lens group (G1) and the imaging plane (IMG) to vary a focal length of the optical lens (100); and
wherein the optical lens (100) satisfies 22° < FOV < 36° and 2.1 < FNO < 3.2, where FOV is a maximum field-of-view angle of the optical lens (100) and FNO is an F-number of the optical lens (100).

2. The optical lens (100) of claim 1, **characterized in that**, the optical lens (100) satisfies at least one of the following relationships: $1.5 < f 1 / fz 1 < 2.6 ;$ $- 1.1 < f 2 / fz 1 < - 0.7 ;$ $1.3 < fz 1 / f 3 < 1.7 ;$ or $- 1.4 < fz 1 / f 4 < - 1 ;$ where f1, f2, f3, and f4 are effective focal lengths of the first lens (L1), the second lens (L2), the third lens (L3), the fourth lens (L4), respectively, and fz1 is an effective focal length of the optical lens (100) in a short focal-length state.

3. The optical lens (100) of claim 1, **characterized in that**, the optical lens (100) satisfies at least one of the following relationships: $1.6 < fz 1 / f 5 < 1.8 ;$ $- 1.3 < f 6 / fz 1 < - 0.7 ;$ $0.7 < f 7 / fz 1 < 1.2 ;$ or $- 2.2 < fz 1 / f 8 < - 1.3 ,$ where f5, f6, f7, and f8 are effective focal lengths of the fifth lens (L5), the sixth lens (L6), the seventh lens (L7), and the eighth lens (L8), respectively, and fz1 is an effective focal length of the optical lens (100) in a short focal-length state.

4. The optical lens (100) of claim 1, **characterized in that**, the optical lens (100) satisfies at least one of the following relationships: $1.6 < fz 1 / R 11 < 2.7 ;$ $0.8 < fz 1 / R 12 < 2.1 ;$ $1.2 < \left|R21\right| / fz 1 ;$ $0.9 < fz 1 / R 22 < 2.1 ;$ or $2.5 < fz 1 / R 31 < 3.3 ;$ wherein fz1 is an effective focal length of the optical lens (100) in a short focal-length state, and Rij is a radius of curvature at the optical axis of an object-side surface of an i-th lens (Li) when j is 1, and Rij is a radius of curvature at the optical axis of an image-side surface of the i-th lens (Li) when j is 2, wherein i is an integer from 1 to 3.

5. The optical lens (100) of claim 1, **characterized in that**, the optical lens (100) satisfies at least one of the following relationships: $1.5 < \left|R41\right| / fz 1 ;$ $1.2 < fz 1 / R 42 < 2.2 ;$ $2.1 < fz 1 / R 51 < 2.8 ;$ $- 1.9 < R 52 / fz 1 < - 0.7 ;$ or $2.5 < \left|R61\right| / fz 1 ;$ wherein fz1 is an effective focal length of the optical lens (100) in a short focal-length state, and Rij is a radius of curvature at the optical axis of an object-side surface of an i-th lens (Li) when j is 1, and Rij is a radius of curvature at the optical axis of an image-side surface of the i-th lens (Li) when j is 2, wherein i is an integer from 4 to 6.

6. The optical lens (100) of claim 1, **characterized in that**, the optical lens (100) satisfies at least one of the following relationships: $1.8 < fz 1 / R 62 < 2.1 ;$ $0.8 < R 71 / fz 1 < 1.4 ;$ $- 5 < R 72 / fz 1 < - 1.1 ;$ $1.1 < \left|R81\right| / fz 1 ;$ or $3.2 < fz 1 / R 82 < 4.2 ,$ wherein fz1 is an effective focal length of the optical lens (100) in a short focal-length state, and Rij is a radius of curvature at the optical axis of an object-side surface of an i-th lens (Li) when j is 1, and Rij is a radius of curvature at the optical axis of an image-side surface of the i-th lens (Li) when j is 2, wherein i is an integer from 6 to 8.

7. The optical lens (100) of claim 1, **characterized in that**, the optical lens (100) satisfies at least one of the following relationships: $- 2.1 < fG 1 / fz 1 < - 1.6 ;$ $1.7 < fz 1 / fG 2 < 2 ;$ $- 1.8 < fz 1 / fG 3 < - 1.3 ;$ or $- 1.4 < fG 3 / fG 2 < - 1 ,$ where fG1, fG2, and fG3 are effective focal lengths of the first lens group (G1), the second lens group (G2), and the third lens group (G3), respectively, and fz1 is an effective focal length of the optical lens (100) in a short focal-length state.

8. The optical lens (100) of claim 1, **characterized in that**, the optical lens (100) satisfies at least one of the following relationships: $4.8 < TTL / ImgH < 5.1 ;$ $3.1 < TTL / \left(CT3+CT4+CT5\right) < 5.4 ;$ $8 < TTL / \left(Az1-Az3\right) < 8.7 ;$ or $19 < TTL / \left(Bz1-Bz3\right) < 25 ,$ where TTL is a distance along the optical axis from the object-side surface (S1) of the first lens (L1) to the imaging plane (IMG), ImgH is one-half of a diagonal length of an effective pixel region at the imaging plane (IMG), CT3, CT4, and CT5 are center thicknesses along the optical axis of the third lens (L3), the fourth lens (L4), and the fifth lens (L5), respectively, Az1 and Az3 are axial air spacings from the image-side surface (S4) of the second lens (L2) to the object-side surface (S5) of the third lens (L3) in a short focal-length state and a long focal-length state, respectively, and Bz1 and Bz3 are axial air spacings from the image-side surface (S10) of the fifth lens (L5) to the object-side surface (S11) of the sixth lens (L6) in the short focal-length state and the long focal-length state, respectively.

9. The optical lens (100) of claim 1, **characterized in that**, the optical lens (100) satisfies at least one of the following relationships: $5 < Az 1 / Az 3 < 29 ;$ $2.3 < \left(Az1-Az3\right) / \left(Bz1-Bz3\right) < 2.9 ;$ $1.6 < Bz 1 / Bz 3 < 1.8 ;$ $1 < SD 11 / SD 82 < 1.15 ;$ or $1.2 < SDmax / SDmin < 1.4 ,$ where Az1 and Az3 are axial air spacings from the image-side surface (S4) of the second lens (L2) to the object-side surface (S5) of the third lens (L3) in a short focal-length state and a long focal-length state, respectively, Bz1 and Bz3 are axial air spacings from the image-side surface (S10) of the fifth lens (L5) to the object-side surface (S11) of the sixth lens (L6) in the short focal-length state and the long focal-length state, respectively, SD11 is a maximum effective aperture radius of the object-side surface (S1) of the first lens (L1), SD82 is a maximum effective aperture radius of the image-side surface (S16) of the eighth lens (L8), and SDmax and SDmin are, respectively, a maximum value and a minimum value among the maximum effective aperture radii of the object-side surfaces (S1, S3, S5, S7, S9, S11, S13, and S15) and the image-side surfaces (S2, S4, S6, S8, S10, S12, S14, and S16) of the first through eighth lenses (L1-L8).

10. The optical lens (100) of claim 1, **characterized in that**, the optical lens (100) satisfies at least one of the following relationships: $1.1 < \left(SAG11+SAG12\right) / CT 6 < 1.9 ;$ or $1.2 < TDz 1 / TDz 3 < 1.35 ,$ where SAG11 is an axial displacement, along the optical axis, between an intersection of the object-side surface (S1) of the first lens (L1) with the optical axis and a point on the object-side surface (S1) at a maximum effective aperture radius of the first lens (L1), SAG12 is an axial displacement, along the optical axis, between an intersection of the image-side surface (S2) of the first lens (L1) with the optical axis and a point on the image-side surface (S2) at the maximum effective aperture radius of the first lens (L1), CT6 is a center thickness of the sixth lens (L6), and TDz1 and TDz3 are axial distances from the object-side surface (S1) of the first lens (L1) to the image-side surface (S16) of the eighth lens (L8) in a short focal-length state and a long focal-length state, respectively.

11. The optical lens (100) of claim 1, **characterized in that**, the optical lens (100) satisfies at least one of the following relationships: $1.5 < CT 3 / AT 34 < 4 ;$ or $0.6 < CT 5 / CT 3 < 2.3 ,$ where CT3 and CT5 are center thicknesses of the third lens (L3) and the fifth lens (L5), respectively, and AT34 is an axial spacing from the image-side surface (S6) of the third lens (L3) to the object-side surface (S7) of the fourth lens (L4).

12. The optical lens (100) of claim 1, **characterized in that**, the optical lens (100) satisfies at least one of the following relationships: $1.2 < FNOz 3 / FNOz 1 < 1.4 ;$ $1.3 < FOVz 1 / FOVz 3 < 1.5 ;$ or $1.3 < fz 3 / fz 1 < 1.5 ,$ where FNOz1 and FNOz3 are F-numbers of the optical lens (100) in a short focal-length state and a long focal-length state, respectively, FOVz1 and FOVz3 are maximum field-of-view angles of the optical lens (100) in the short focal-length state and the long focal-length state, respectively, and fz1 and fz3 are effective focal lengths of the optical lens (100) in the short focal-length state and the long focal-length state, respectively.

13. The optical lens (100) of claim 1, **characterized in that**, the optical lens (100) satisfies at least one of the following relationships: $2.4 < GL 2 / GL 1 < 3.7 ;$ $1.4 < GL 2 / GL 3 < 2.5 ;$ or $1.2 < GL 3 / GL 1 < 1.8 ,$ where GL1, GL2, and GL3 are axial lengths of the first lens group (G1), the second lens group (G2), and the third lens group (G3), respectively.

14. A camera module (200), **characterized by**, comprising:
an optical lens (100) comprising a total of eight lenses with refractive power, the eight lenses comprising a first lens (L1), a second lens (L2), a third lens (L3), a fourth lens (L4), a fifth lens (L5), a sixth lens (L6), a seventh lens (L7), and an eighth lens (L8) arranged, in order from an object side to an image side along an optical axis; and
an image sensor (201) disposed on the image side of the optical lens (100),
the first lens (L1) has positive refractive power, an object-side surface (S1) of the first lens (L1) is convex near the optical axis, and an image-side surface (S2) of the first lens (L1) is concave near the optical axis; the second lens (L2) has negative refractive power, and an image-side surface (S4) of the second lens (L2) is concave near the optical axis; the third lens (L3) has positive refractive power, and an object-side surface (S5) of the third lens (L3) is convex near the optical axis; the fourth lens (L4) has negative refractive power, and an image-side surface (S8) of the fourth lens (L4) is concave near the optical axis; the fifth lens (L5) has positive refractive power, and an object-side surface (S9) and an image-side surface (S10) of the fifth lens (L5) are convex near the optical axis; the sixth lens (L6) has negative refractive power, and an image-side surface (S12) of the sixth lens (L6) is concave near the optical axis; the seventh lens (L7) has positive refractive power, and an object-side surface (S13) and an image-side surface (S14) of the seventh lens (L7) are convex near the optical axis; the eighth lens (L8) has negative refractive power, and an image-side surface (S16) of the eighth lens (L8) is concave near the optical axis; the first lens (L1) and the second lens (L2) form a first lens group (G1), the third lens (L3), the fourth lens (L4), and the fifth lens (L5) form a second lens group (G2), and the sixth lens (L6), the seventh lens (L7), and the eighth lens (L8) form a third lens group (G3);
wherein the first lens group (G1) is fixed relative to an imaging plane (IMG) of the optical lens (100), and the second lens group (G2) and the third lens group (G3) are movable along the optical axis between the first lens group (G1) and the imaging plane (IMG) to vary a focal length of the optical lens (100); and
wherein the optical lens (100) satisfies 22° < FOV < 36° and 1.3 < fz3/fz1 < 1.5, where FOV is a maximum field-of-view angle of the optical lens (100), and fz1 and fz3 are effective focal lengths of the optical lens (100) in a short focal-length state and a long focal-length state, respectively.

15. An electronic device (300), **characterized by**, comprising:
a housing (301); and
a camera module (200) mounted to the housing (301), the camera module (200) comprising:
an optical lens (100) comprising a total of eight lenses with refractive power, the eight lenses comprising a first lens (L1), a second lens (L2), a third lens (L3), a fourth lens (L4), a fifth lens (L5), a sixth lens (L6), a seventh lens (L7), and an eighth lens (L8) arranged, in order from an object side to an image side along an optical axis; and
an image sensor (201) disposed on the image side of the optical lens (100),
the first lens (L1) has positive refractive power, an object-side surface (S1) of the first lens (L1) is convex near the optical axis, and an image-side surface (S2) of the first lens (L1) is concave near the optical axis; the second lens (L2) has negative refractive power, and an image-side surface (S4) of the second lens (L2) is concave near the optical axis; the third lens (L3) has positive refractive power, and an object-side surface (S5) of the third lens (L3) is convex near the optical axis; the fourth lens (L4) has negative refractive power, and an image-side surface (S8) of the fourth lens (L4) is concave near the optical axis; the fifth lens (L5) has positive refractive power, and an object-side surface (S9) and an image-side surface (S10) of the fifth lens (L5) are convex near the optical axis; the sixth lens (L6) has negative refractive power, and an image-side surface (S12) of the sixth lens (L6) is concave near the optical axis; the seventh lens (L7) has positive refractive power, and an object-side surface (S13) and an image-side surface (S14) of the seventh lens (L7) are convex near the optical axis; the eighth lens (L8) has negative refractive power, and an image-side surface (S16) of the eighth lens (L8) is concave near the optical axis; the first lens (L1) and the second lens (L2) form a first lens group (G1), the third lens (L3), the fourth lens (L4), and the fifth lens (L5) form a second lens group (G2), and the sixth lens (L6), the seventh lens (L7), and the eighth lens (L8) form a third lens group (G3);
wherein the first lens group (G1) is fixed relative to an imaging plane (IMG) of the optical lens (100), and the second lens group (G2) and the third lens group (G3) are movable along the optical axis between the first lens group (G1) and the imaging plane (IMG) to vary a focal length of the optical lens (100); and
wherein the optical lens (100) satisfies 22° < FOV < 36°, -2.1 < fG1/fz1 < -1.6, 1.7 < fz1/fG2 < 2, and -1.8 < fz1/fG3 < -1.3, where FOV is a maximum field-of-view angle of the optical lens (100), **fG1,** fG2, and fG3 are effective focal lengths of the first lens group (G1), the second lens group (G2), and the third lens group (G3), respectively, and fz1 is an effective focal length of the optical lens (100) in a short focal-length state.
